# EUROPEAN PATENT APPLICATION

(11) **EP 4 617 928 A1**
(43) Date of publication of application: **17.09.2025**
(21) Application number: 23895950.6
(22) Date of filing: 25.06.2023
(51) Int. Cl.: G06F 21/54

(54) **MEMORY SECURITY IMPROVEMENT METHOD AND APPARATUS AND COMPUTING DEVICE**

(30) Priority: 30.11.2022 CN 202211520896
(71) Applicant: Huawei Technologies Co., Ltd., Shenzhen, Guangdong 518129 (CN)
(72) Inventor: XU, Maoda, Shenzhen, Guangdong 518129 (CN); LIN, Weixin, Shenzhen, Guangdong 518129 (CN); WANG, Yaxing, Shenzhen, Guangdong 518129 (CN)
(74) Representative: Isarpatent
(86) International application number: PCT/CN2023/102109
(87) International publication number: WO 2024/113786

(57) **Abstract**

A memory security improvement method includes: adding pointer attributes of a plurality of pointers to source code to obtain first code, where the plurality of pointers are pointers in the source code, and the pointer attributes are at least used to represent bounds of memory areas pointed to by the pointers; generating, based on the pointer attributes of the plurality of pointers, an out-of-bounds check instruction corresponding to each of the plurality of pointers, and generating, based on pointer variables of the plurality of pointers, a null check instruction corresponding to each of the plurality of pointers; adding the out-of-bounds check instruction and/or the null check instruction before a risky statement that has a memory security problem in the first code, to obtain second code, where each risky statement includes at least one pointer; and generating an executable file based on the second code. The method can improve memory security.

## Description

This application claims priority to Chinese Patent Application No. 202211520896.7, filed with the China National Intellectual Property Administration on November 30, 2022 and entitled "MEMORY SECURITY IMPROVEMENT METHOD AND APPARATUS, AND COMPUTING DEVICE", which is incorporated herein by reference in its entirety.

### TECHNICAL FIELD

The present invention relates to the field of information technology (information technology, IT), and in particular, to a memory security improvement method and apparatus, and a computing device.

### BACKGROUND

When a program runs in memory, the program accesses the memory almost all the time. A program written in the C language is used as an example. The program written in the C language has advantages such as fine-grained use of a memory layout, explicit flexibility in memory management, and direct control over underlying hardware. However, flexible memory access of the C language achieves high performance but also brings about great security risks. Because the C language supports arbitrary pointer operations, manual memory management, unchecked memory access, and the like, a C language program developer is likely to bypass a security barrier and perform destructive access to some memory areas, greatly affecting security and reliability of a C language program. Memory security problems caused by the destructive access may include memory space security problems, that is, whether a pointer exceeds a space limit during memory access of the program, for example, null pointer dereferencing, out-of-bounds reading, and out-of-bounds writing. Resolving the memory space security problems can greatly improve security of the program. Therefore, how to resolve the memory space security problems has become a technical problem that urgently needs to be resolved currently.

### SUMMARY

To resolve a problem existing in the conventional technology, embodiments of this application provide a memory security improvement method and apparatus, a computing device, a computer storage medium, and a product including a computer program, which can resolve memory space security problems and improve security of a program.

According to a first aspect, this application provides a memory security improvement method. The method includes: adding pointer attributes of a plurality of pointers to source code to obtain first code, where the plurality of pointers are pointers in the source code, and the pointer attributes are at least used to represent bounds of memory areas pointed to by the pointers; generating, based on the pointer attributes of the plurality of pointers, an out-of-bounds check instruction corresponding to each of the plurality of pointers; adding the out-of-bounds check instruction before a risky statement that has a memory security problem in the first code, to obtain second code, where each risky statement includes at least one pointer; and generating an executable file based on the second code.

In this way, a pointer attribute of a pointer is added to the code, a check instruction is generated based on the pointer attribute, and the check instruction is inserted before a code statement that may cause a memory security problem in the code, so that the memory security problem is intercepted before the problem occurs, thereby greatly reducing a possibility of the memory security problem. In addition, intercepting faulty code in the first place can improve efficiency of code debugging by a developer.

In a possible implementation, code statements in which the plurality of pointers are located are not annotated with the pointer attributes of the plurality of pointers, and the adding pointer attributes of a plurality of pointers to source code specifically includes: for any pointer in the source code, determining that the any pointer has a pointer attribute; parsing a code statement in which the any pointer is located, to obtain the pointer attribute of the any pointer; and adding the pointer attribute of the any pointer to the source code.

In this way, for a code statement that assigns a value to a pointer in the source code by using a function, a pointer attribute included in the function may be directly obtained, and the pointer attribute is inserted into the source code in a form of a code statement, so that the pointer attribute of the pointer can be directly obtained in subsequent use.

In a possible implementation, the adding pointer attributes of a plurality of pointers to source code specifically includes: for any pointer in the source code, determining that the any pointer has no pointer attribute and that a code statement in which the any pointer is located is not annotated with a length constraint of the any pointer; using a pointer attribute of a first pointer as a pointer attribute of the any pointer, where the first pointer is an assigner that assigns a value to the any pointer; and adding the pointer attribute of the any pointer to the source code.

In this way, for a code statement in which one pointer assigns a value to another pointer and the assigned pointer is explicitly annotated with a length constraint in the source code, a pointer attribute of the assigner may be used as a pointer attribute of the assignee. Based on the pointer attribute of the assigner and the length constraint of the assignee, bounds of a memory area pointed to by the pointer of the assignee can be conveniently determined.

In a possible implementation, the adding pointer attributes of a plurality of pointers to source code specifically includes: for any pointer in the source code, determining that the any pointer has no pointer attribute and that a code statement in which the any pointer is located is annotated with a length constraint of the any pointer; using a lower bound of a memory area pointed to by a first pointer as a lower bound of a memory area pointed to by the any pointer, and using a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and adding the pointer attribute of the any pointer to the source code.

In this way, for a code statement in which one pointer assigns a value to another pointer and the assigned pointer is explicitly annotated with a length constraint in the source code, a lower bound of a memory area pointed to by the pointer of the assigner may be used as a lower bound of a memory area pointed to by the pointer of the assignee, and a sum of the lower bound of the memory area pointed to by the pointer of the assignee and a length of the pointer is used as an upper bound of the memory area pointed to by the pointer, so that information about the upper and lower bounds can be conveniently used when a subsequent check instruction is generated.

In a possible implementation, the adding pointer attributes of a plurality of pointers to source code specifically includes: for any pointer in the source code, determining that the any pointer has no pointer attribute; obtaining a supplement operation on a pointer attribute of the any pointer; and adding the supplemented pointer attribute to the source code.

In this way, the developer can be reminded of a code statement that has no pointer attribute, so that the developer freely chooses whether to supplement a pointer attribute in the code statement, thereby making the solution more flexible.

In a possible implementation, in the first code, a pointer attribute of each pointer is located after a code statement in which the pointer is located.

In a possible implementation, the method further includes: generating, based on pointer variables of the plurality of pointers, a null check instruction corresponding to each of the plurality of pointers; and adding the null check instruction before the risky statement.

In a possible implementation, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In a possible implementation, the adding the check instruction before each risky statement specifically includes: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, adding the out-of-bounds check instruction before the risky statement, where the out-of-bounds check instruction is used to perform an out-of-bounds check; or when the risky statement is the code statement for memory access, adding the null check instruction before the risky statement, where the null check instruction is used to perform a null check.

In this way, when the pointer operation is performed and the value is assigned to the pointer annotated with the length constraint of the assignee, no actual memory access occurs. Therefore, only the bounds of the memory area need to be checked. When memory access occurs, because the bounds have been checked, only the null check may be required. Therefore, an amount of code in the check statement can be reduced.

According to a second aspect, this application provides another memory security improvement method. The method includes: adding pointer attributes of a plurality of pointers to source code to obtain first code, where the plurality of pointers are pointers in the source code, and the pointer attributes are at least used to represent bounds of memory areas pointed to by the pointers; generating, based on pointer variables of the plurality of pointers, a null check instruction corresponding to each of the plurality of pointers; adding the null check instruction before a risky statement that has a memory security problem in the first code, to obtain second code, where each risky statement includes at least one pointer; and generating an executable file based on the second code.

In a possible implementation, code statements in which the plurality of pointers are located are not annotated with the pointer attributes of the plurality of pointers, and the adding pointer attributes of a plurality of pointers to source code specifically includes: for any pointer in the source code, determining that the any pointer has a pointer attribute; parsing a code statement in which the any pointer is located, to obtain the pointer attribute of the any pointer; and adding the pointer attribute of the any pointer to the source code.

In a possible implementation, the adding pointer attributes of a plurality of pointers to source code specifically includes: for any pointer in the source code, determining that the any pointer has no pointer attribute and that a code statement in which the any pointer is located is not annotated with a length constraint of the any pointer; using a pointer attribute of a first pointer as a pointer attribute of the any pointer, where the first pointer is an assigner that assigns a value to the any pointer; and adding the pointer attribute of the any pointer to the source code.

In a possible implementation, the adding pointer attributes of a plurality of pointers to source code specifically includes: for any pointer in the source code, determining that the any pointer has no pointer attribute and that a code statement in which the any pointer is located is annotated with a length constraint of the any pointer; using a lower bound of a memory area pointed to by a first pointer as a lower bound of a memory area pointed to by the any pointer, and using a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and adding the pointer attribute of the any pointer to the source code.

In a possible implementation, the adding pointer attributes of a plurality of pointers to source code specifically includes: for any pointer in the source code, determining that the any pointer has no pointer attribute; obtaining a supplement operation on a pointer attribute of the any pointer; and adding the supplemented pointer attribute to the source code.

In a possible implementation, in the first code, a pointer attribute of each pointer is located after a code statement in which the pointer is located.

In a possible implementation, the method further includes: generating, based on the pointer attributes of the plurality of pointers, an out-of-bounds check instruction corresponding to each of the plurality of pointers; and adding the out-of-bounds check instruction before the risky statement.

In a possible implementation, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In a possible implementation, the adding the check instruction before each risky statement specifically includes: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, adding the out-of-bounds check instruction before the risky statement, where the out-of-bounds check instruction is used to perform an out-of-bounds check; or when the risky statement is the code statement for memory access, adding the null check instruction before the risky statement, where the null check instruction is used to perform a null check.

According to a third aspect, this application provides a memory security improvement apparatus. The apparatus includes a processing module. The processing module is configured to add pointer attributes of a plurality of pointers to source code to obtain first code, where the plurality of pointers are pointers in the source code, and the pointer attributes are at least used to represent bounds of memory areas pointed to by the pointers. The processing module is further configured to generate, based on the pointer attributes of the plurality of pointers, an out-of-bounds check instruction corresponding to each of the plurality of pointers. The processing module is further configured to add the out-of-bounds check instruction before a risky statement that has a memory security problem in the first code, to obtain second code. The processing module is further configured to generate an executable file based on the second code.

In a possible implementation, code statements in which the plurality of pointers are located are not annotated with the pointer attributes of the plurality of pointers, and when adding the pointer attributes of the plurality of pointers to the source code, the processing module is specifically configured to: for any pointer in the source code, determine that the any pointer has a pointer attribute and that a code statement in which the any pointer is located is not annotated with the pointer attribute of the any pointer; parse the code statement in which the any pointer is located, to obtain the pointer attribute of the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute and that a code statement in which the any pointer is located is not annotated with a length constraint of the any pointer; use a pointer attribute of a first pointer as a pointer attribute of the any pointer, where the first pointer is an assigner that assigns a value to the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute and that a code statement in which the any pointer is located is annotated with a length constraint of the any pointer; use a lower bound of a memory area pointed to by a first pointer as a lower bound of a memory area pointed to by the any pointer, and use a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute; obtain a supplemented pointer attribute for the any pointer; and add the supplemented pointer attribute to the source code.

In a possible implementation, in the first code, a pointer attribute of each pointer is located after a code statement in which the pointer is located.

In a possible implementation, the processing module is further configured to: generate, based on pointer variables of the plurality of pointers, a null check instruction corresponding to each of the plurality of pointers; and add the null check instruction before the risky statement.

In a possible implementation, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In a possible implementation, when adding the out-of-bounds check instruction and/or the null check instruction before the risky statement, the processing module is specifically configured to: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, add the out-of-bounds check instruction before the risky statement, where the out-of-bounds check instruction is used to perform an out-of-bounds check; or when the risky statement is the code statement for memory access, add the null check instruction before the risky statement, where the null check instruction is used to perform a null check.

According to a fourth aspect, this application provides another memory security improvement apparatus. The apparatus includes a processing module. The processing module is configured to add pointer attributes of a plurality of pointers to source code to obtain first code, where the plurality of pointers are pointers in the source code, and the pointer attributes are at least used to represent bounds of memory areas pointed to by the pointers. The processing module is further configured to generate, based on pointer variables of the plurality of pointers, a null check instruction corresponding to each of the plurality of pointers. The processing module is further configured to add the null check instruction before a risky statement that has a memory security problem in the first code, to obtain second code. The processing module is further configured to generate an executable file based on the second code.

In a possible implementation, code statements in which the plurality of pointers are located are not annotated with the pointer attributes of the plurality of pointers, and when adding the pointer attributes of the plurality of pointers to the source code, the processing module is specifically configured to: for any pointer in the source code, determine that the any pointer has a pointer attribute and that a code statement in which the any pointer is located is not annotated with the pointer attribute of the any pointer; parse the code statement in which the any pointer is located, to obtain the pointer attribute of the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute and that a code statement in which the any pointer is located is not annotated with a length constraint of the any pointer; use a pointer attribute of a first pointer as a pointer attribute of the any pointer, where the first pointer is an assigner that assigns a value to the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute and that a code statement in which the any pointer is located is annotated with a length constraint of the any pointer; use a lower bound of a memory area pointed to by a first pointer as a lower bound of a memory area pointed to by the any pointer, and use a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and add the pointer attribute of the any pointer to the source code.

In a possible implementation, when adding the pointer attributes of the plurality of pointers to the source code, the processing module is specifically configured to: for any pointer in the source code, determine that the any pointer has no pointer attribute; obtain a supplemented pointer attribute for the any pointer; and add the supplemented pointer attribute to the source code.

In a possible implementation, in the first code, a pointer attribute of each pointer is located after a code statement in which the pointer is located.

In a possible implementation, the processing module is further configured to: generate, based on the pointer attributes of the plurality of pointers, an out-of-bounds check instruction corresponding to each of the plurality of pointers; and add the out-of-bounds check instruction before the risky statement.

In a possible implementation, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In a possible implementation, when adding the out-of-bounds check instruction and/or the null check instruction before the risky statement, the processing module is specifically configured to: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, add the out-of-bounds check instruction before the risky statement, where the out-of-bounds check instruction is used to perform an out-of-bounds check; or when the risky statement is the code statement for memory access, add the null check instruction before the risky statement, where the null check instruction is used to perform a null check.

According to a fifth aspect, this application provides a computing device, including: at least one memory, configured to store a program; and
at least one processor, configured to execute the program stored in the memory, where when the program stored in the memory is executed, the processor is configured to perform the method described in the first aspect or the second aspect.

According to a sixth aspect, this application provides a computer-readable storage medium, including computer-readable instructions, where when a computer reads and executes the computer-readable instructions, the computer is enabled to perform the method described in the first aspect or the second aspect.

According to a seventh aspect, this application provides a product including a computer program, where when the computer program product is run on a processor, the processor is enabled to perform the method described in the first aspect or the second aspect.

It may be understood that, for beneficial effects of the second aspect to the seventh aspect, reference may be made to related descriptions in the first aspect. Details are not described herein again.

### BRIEF DESCRIPTION OF DRAWINGS

To describe the technical solutions in embodiments of the present invention more clearly, the following briefly describes the accompanying drawings required for describing the embodiments. It is clear that the accompanying drawings in the following description show merely some embodiments of the present invention, and a person of ordinary skill in the art may still derive other drawings from these accompanying drawings without creative efforts.
FIG. 1 is a schematic flowchart of a memory security improvement method according to an embodiment of this application;
FIG. 2 is a diagram of an architecture of a memory security improvement system according to an embodiment of this application;
FIG. 3 is a schematic flowchart of another memory security improvement method according to an embodiment of this application;
FIG. 4 is a diagram of an integrated development environment according to an embodiment of this application;
FIG. 5 is a diagram of a compiler according to an embodiment of this application;
FIG. 6 is a diagram of a program analysis tool according to an embodiment of this application;
FIG. 7 is a diagram of a structure of a memory security improvement apparatus according to an embodiment of this application; and
FIG. 8 is a diagram of a structure of a computing device according to an embodiment of this application.

### DESCRIPTION OF EMBODIMENTS

To make the objectives, technical solutions, and advantages of embodiments of the present invention clearer, the following clearly and completely describes the technical solutions in embodiments of the present invention with reference to the accompanying drawings in embodiments of the present invention. It is clear that the described embodiments are some but not all of embodiments of the present invention. All other embodiments obtained by a person of ordinary skill in the art based on embodiments of the present invention without creative efforts shall fall within the protection scope of the present invention.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message and a second response message are used to distinguish between different response messages, but not used to describe a particular order of the response messages.

In embodiments of this application, the term "example", "for example", or the like represents an example, an illustration, or a description. Any embodiment or design scheme described as "example" or "for example" in embodiments of this application should not be construed as being more preferred or advantageous than another embodiment or design scheme. To be precise, the terms such as "example" or "for example" are intended to present a relative concept in a specific manner.

In the descriptions of embodiments of this application, unless otherwise specified, "a plurality of" means two or more. For example, a plurality of processing units are two or more processing units, and a plurality of elements are two or more elements.

First, technical terms used in this application are described.
1. Memory security problems refer to destructive access of a computer program to a memory area, including null pointer dereferencing, out-of-bounds reading, out-of-bounds writing, reuse after release, memory leakage, repeated release, and the like. Such access may cause software errors or security vulnerabilities, which are referred to as memory security problems.
2. Pointer dereferencing, also referred to as dereferencing, is to decode a memory area pointed to by a pointer, to obtain a value stored in the area.
3. A check instruction, also referred to as a check instruction, is used to determine whether a check condition is met. For example, in a check(a < b) instruction, whether a is less than b is checked. When the check succeeds (that is, a < b), execution of the program is continued based on original logic. When the check fails (that is, a ≥ b), execution of the program is interrupted.
4. An upper bound of a memory area is a higher memory address of the memory area.
5. A lower bound of a memory area is a lower memory address of the memory area. For example, if a memory area is from 0x0000001 to 0x0000099, an upper bound of the memory area is 0x0000099, and a lower bound of the memory area is 0x0000001.
6. An out-of-bounds check is a type of check instruction, and a check condition is whether an area pointed to by a pointer exceeds bounds of a memory area. The out-of-bounds check may include an upper-bound check and a lower-bound check. For example, check(p >= lower) is a lower-bound check, and is to check whether a location pointed to by a pointer p exceeds a lower bound lower of the memory; and check(p <= upper) is an upper-bound check, and is to check whether the location pointed to by the pointer p exceeds an upper bound upper of the memory.
7. A null check is a type of check instruction, and a check condition is to determine whether an object pointed to by a pointer is null. For example, check(p! = nullptr) is a null check, and is to check whether an object pointed to by a pointer p is null.
8. Pointer aliasing refer to a plurality of pointers pointing to a same memory block. There is an aliasing relationship between the plurality of pointers.
9. Pointer attributes are used to indicate some attribute features of a pointer or information about a memory block pointed to by a pointer, and may be attributes such as a length and a bound of memory space pointed to by the pointer.

Next, to facilitate understanding of embodiments of this application, the following further describes specific embodiments with reference to the accompanying drawings. The embodiments do not constitute limitations on embodiments of this application.

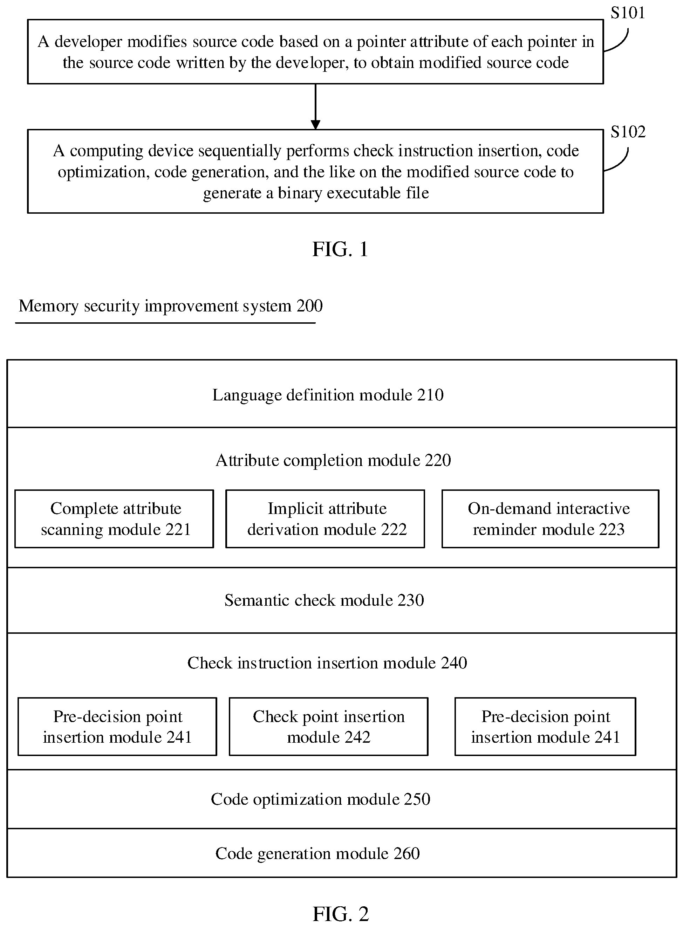

For example, FIG. 1 shows a procedure of a memory security improvement method. As shown in FIG. 1, in S101, after writing source code (source code), a developer may modify the source code based on a pointer attribute of each pointer in the source code to obtain modified source code. In S102, a computing device may sequentially perform check instruction insertion, code optimization, code generation, and the like on the modified source code to generate a binary executable file. During execution of the binary file, runtime error information is provided for O&M personnel, to assist the O&M personnel in debugging the source code.

At a stage at which the developer modifies the source code, the developer needs to inspect the code line by line, identify a pointer in the code, and modify a code statement in which the pointer is located. The modification may be divided into two aspects.

In the first aspect, the developer identifies a code statement in which a pointer is located, and determines whether the pointer has a pointer attribute. For a pointer without a pointer attribute, the pointer is modified by using ptr<T>. For a pointer with a pointer attribute, the pointer is modified by using array_ptr<T>. This process is manually completed by the developer. For example, the developer detects that a line of code is "int *p = 0" and identifies that a pointer p exists in this line of code, but the pointer has no pointer attribute. Therefore, the developer can modify the pointer by using ptr<T>, to obtain "ptr<int> x = 0". The developer further detects that a line of code is "int x = malloc(sizeof(int) * 5)". The developer identifies that a malloc function exists in the code and that a value of x is a return value of malloc(sizeof(int) * 5). In this case, the developer may determine that a pointer has a pointer attribute, that is, a length of memory space pointed to by a pointer x is 5. Therefore, the developer can modify the pointer by using array_ptr<T>, to obtain "array_ptr<int> x = malloc(sizeof(int) * 5)", where malloc represents a dynamic memory allocation function, and the function is used to request a contiguous memory block area with a specified size. It may be understood that the malloc function is merely an example in this embodiment of this application. In addition to the malloc function, functions such as a calloc function, a realloc function, and an alloca function may also be used.

In the second aspect, for a pointer modified by using array_ptr<T>, the developer manually annotates a code statement with length information of a memory area pointed to by the pointer. For example, there is a line of code "array_ptr<int> x = malloc(sizeof(int) * 5)" in the source code. This line of code means that a pointer x of an int type is defined in the source code and that the pointer points to a memory area with a length of 5. When detecting this line of code, the developer identifies that the code includes the malloc function, and determines that a variable x assigned by the malloc function is a pointer. After detecting the pointer, the developer identifies that a type of memory space pointed to by the pointer x is the int type and that the length is 5. In this case, the developer manually annotates the length attribute in the code to obtain the code "array_ptr<int> x = malloc(sizeof(int) * 5) where x : count(5)". After the developer annotates all pointer attributes, the source code modified by the developer may be obtained.

At a check instruction insertion stage, the computing device obtains the source code modified by the developer, and may insert a check instruction into the code. Check instructions may include a null check instruction and an out-of-bounds check instruction. The out-of-bounds check instruction may further include an upper-bound check instruction and a lower-bound check instruction. A check instruction may be inserted in a position before a code statement in which a pointer is located. When the computing device inserts the check instruction into the code, because the pointer modified by using ptr<T> has no pointer attribute, a pointer out-of-bounds problem does not occur. Therefore, only a null check needs to be performed, that is, only a null check instruction needs to be inserted. For a pointer modified by using array_ptr<int>, because the pointer has a pointer attribute, both a null check and an out-of-bounds check need to be performed, that is, a null check instruction and an out-of-bounds check instruction need to be inserted. For a pointer modified by using array_ptr<int>, when the computing device inserts a check instruction, the computing device first obtains a pointer attribute manually annotated by a user, and generates a check instruction based on the pointer attribute.

For example, the source code modified by the developer and obtained by the computing device includes the following code:

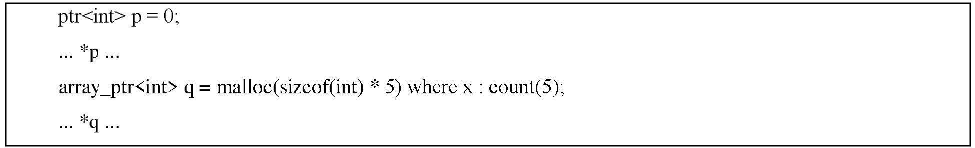

In the code, the pointer p modified by using ptr<T> has no pointer attribute. Therefore, only a null check needs to be performed. A pointer q modified by using array_ptr<int> has a pointer attribute. Therefore, a null check and an out-of-bounds check need to be performed. During the out-of-bounds check, the computing device obtains the pointer attribute manually annotated by the user, identifies that a length of memory space pointed to by the pointer is 5, and generates a check instruction based on the length information. The computing device may insert the check instruction into the code, and obtained code is:

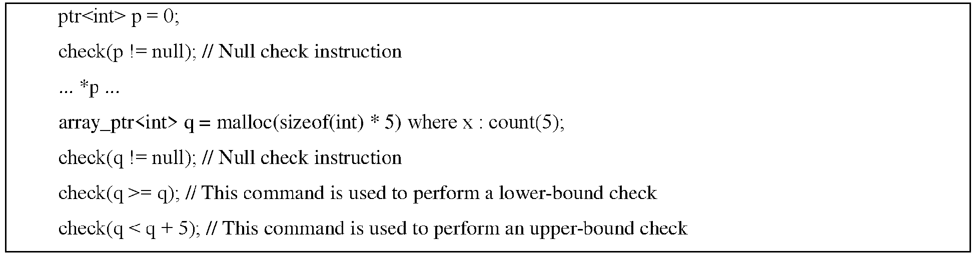

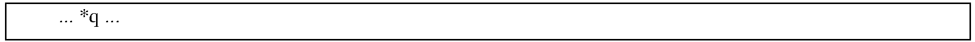

At code optimization and code generation stages, after inserting the check instruction into the source code modified by the developer, the computing device may generate, based on the code obtained after the check instruction is inserted, a machine instruction that can be run by the computing device. When the code is run online, the check instruction is triggered. If a check condition is not met, program execution is stopped. In addition, the developer may use debug information in a development tool to debug the code where the program encounters a problem.

In this embodiment, the developer obtains the source code, modifies the source code, separately modifies the pointer with the pointer attribute and the pointer without the pointer attribute, and manually supplements the length of the memory area pointed to by the pointer with the pointer attribute. The computing device may insert a check instruction (for example, a null check instruction or an out-of-bounds check instruction) into the source code modified by the developer based on the source code modified by the developer, so that the program exits execution when a memory security problem occurs during subsequent running, thereby preventing the memory security problem. However, in some special cases, for example, when a self-increment calculation is performed on a pointer, a pointer attribute cannot be annotated. Alternatively, the developer omits pointer attributes of some pointers when modifying the source code. As a result, the computing device cannot insert the check instruction, and cannot generate the check instruction. Alternatively, an error point in the code is far away from a code statement in which an error occurs, increasing difficulty in debugging when the error occurs. In addition, the source code modification is manually completed by the developer, increasing costs of the source code modification.

For example, a self-increment operation is performed on a pointer, and then memory access is performed. The code is as follows:

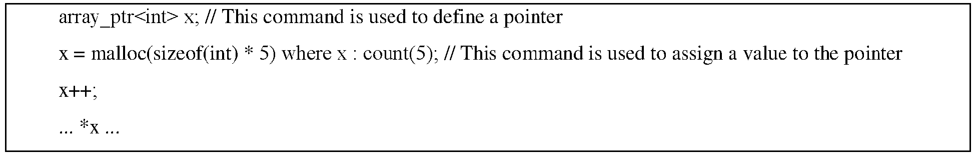

In the code, the developer annotates a length of memory space pointed to by a pointer x, and then performs a self-increment operation on x. Subsequently, access to the memory space pointed to by x is essentially access to memory space pointed to by the self-incremented x. In this case, because the computing device does not obtain bound information of the memory space pointed to by the self-incremented x, only information obtained before the self-increment can be used to perform an out-of-bounds check. Therefore, a generated out-of-bounds check instruction is invalid. Example:

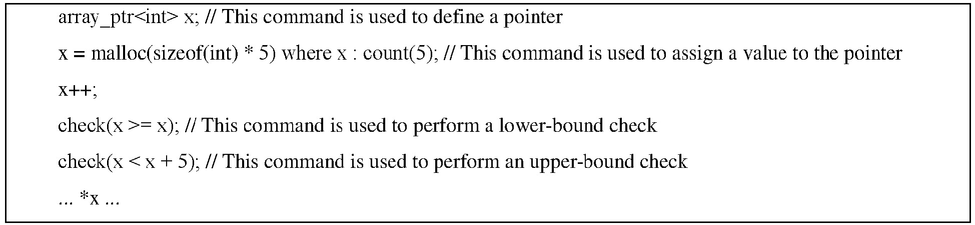

Although the computing device inserts a check instruction into the code, the check instruction is generated based on information obtained before the self-increment. After x is self-incremented, the check instruction is invalid.

For another example, when modifying the source code, the developer omits annotating a length of a memory area pointed to by a pointer. The code is as follows:

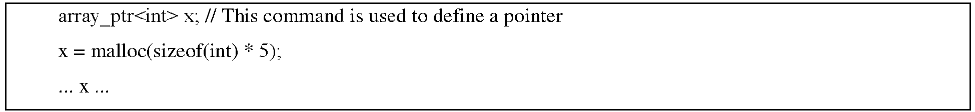

In the code, the developer modifies a pointer x by using array_ptr<T>, but omits annotating length information of memory space pointed to by the pointer. In this case, because the computing device cannot directly obtain the length of the memory space pointed to by x, the computing device cannot generate an out-of-bounds check instruction, and cannot insert the check instruction into the code.

For another example, when modifying the source code, the developer defines a first pointer and a second pointer in the source code, defines length constraint information for the second pointer, and assigns a value of the first pointer to the second pointer. In this case, due to presence of a length constraint on the second pointer, only length information of the second pointer can be used to perform an out-of-bounds check on the second pointer subsequently. If a length of a memory area pointed to by the first pointer is less than the length information of the second pointer, a case in which out-of-bounds memory access cannot be intercepted occurs. The code is as follows:

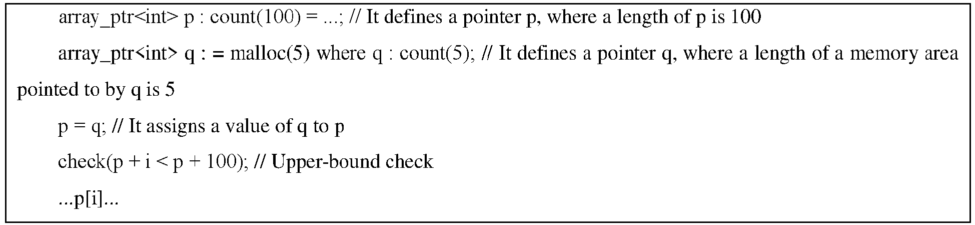

In the code, a pointer p is a pointer of the int type with a length of a, and a length of a memory area pointed to by a pointer q is b. After assignment p = q, because length information of p is explicitly annotated (as 100), the length information of p is constantly 100. When p[i] is accessed, check(i < 100) is executed to perform determining. However, because an actual length of a memory block pointed to by p is 5 in this case, if i ≥ 5, a pointer out-of-bounds problem occurs.

For another example, an out-of-bounds problem occurs when a pointer is dereferenced in the code. However, the code that actually causes the pointer to go out of bounds is not code that dereferences the pointer in several previous lines. Example code is as follows:

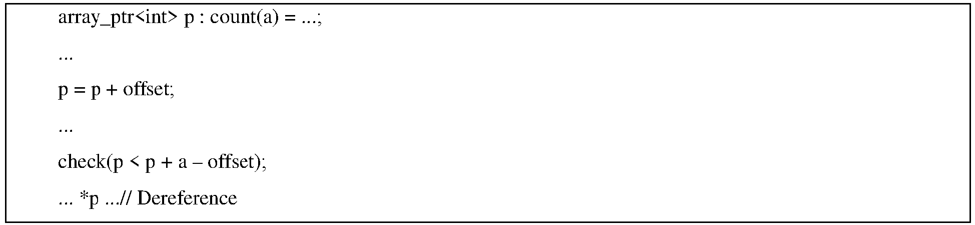

In the code, when a pointer p is dereferenced, the pointer goes out of bounds, but a behavior that causes the pointer to go out of bounds occurs at a line "p = p + offset". However, this line of code and the dereferencing of the pointer p are separated by many lines of code, and even behaviors such as cross-stack calls may occur in between. Code in which an error occurs is far away from code that generates the error, resulting in excessively high costs for the developer during code debugging.

In view of this, an embodiment of this application provides another memory security improvement method. Considering that most pointer attributes are implicit in program code, an embodiment of this application provides a method for implicitly deriving a pointer attribute, to derive implicit attribute information in a pointer attribute. A check instruction is generated based on an implicitly derived pointer attribute, and the check instruction is inserted into source code, so that during memory access, the program directly exits execution if the check instruction fails.

For example, FIG. 2 shows an architecture of a memory security improvement system. As shown in FIG. 2, the memory security improvement system 200 may include a language definition module 210, an attribute completion module 220, a semantic check module 230, a check instruction insertion module 240, a code optimization module 250, and a code generation module 260.

The language definition module 210 may be configured to describe a syntax rule of a programming language. Syntax defined in this module not only includes syntax originally included in the programming language, but also may include syntax for identifying pointers included in code, syntax for identifying pointer attributes, syntax for annotating pointer attributes of pointers in the code, syntax for generating check instructions, pointer length constraint syntax, and the like. For example, the syntax for identifying pointers may identify a code statement that includes a malloc function, a calloc function, a realloc function, an alloca function, or the like, or a code statement that includes a keyword such as new or where. The syntax for annotating pointer attributes of pointers in the code may define "pointer variable name_lower" to annotate a lower bound of a memory area pointed to by a pointer, and define "pointer variable name_upper" to annotate an upper bound of the memory area pointed to by the pointer, or the like. The syntax for generating check instructions may define a statement "check(pointer variable != null)" or define a statement "check(pointer variable name != null)" to indicate a null check instruction, define a statement "check(pointer variable >= lower bound of a memory area)" to indicate a lower-bound check instruction, and define "check(pointer variable < upper bound of the memory area)" to indicate an upper-bound check instruction. The pointer length constraint syntax may define "where pointer variable: count(n)" after a pointer variable to indicate a pointer length constraint. For example, the syntax rule described in the language definition module 210 may be written by a developer or another person by using a user interface (user interface, UI) provided by a computing device. The computing device may be a device on which the memory security improvement system 200 is deployed.

The attribute completion module 220 may be configured to complete pointer attributes of all pointers in source code. For example, the attribute completion module 220 may include a complete attribute scanning module 221, an implicit attribute derivation module 222, and an on-demand interactive reminder module 223.

The complete attribute scanning module 221 may scan, based on a syntax rule used to identify pointers as described in the language definition module 210, the source code stored by the developer on the computing device, to obtain each pointer included in the source code. Then the complete attribute scanning module 221 may identify each pointer based on a syntax rule used to identify pointer attributes as described in the language definition module 210, to determine a pointer attribute included in each pointer. It should be understood that determining a pointer and determining a pointer attribute may be performed simultaneously, or may be performed separately. This may be specifically determined based on an actual situation, and is not limited herein. For example, code "int *p = malloc(sizeof(int) * 5)" exists in the source code. The complete attribute scanning module 221 scans this line of code based on the syntax rule described in the language definition module 210, determines that this line of code includes the malloc function, determines that p is a pointer, determines that a pointer attribute included in the pointer p is that a memory area pointed to by the pointer p has a length of 5, with an upper bound being p + 5 and a lower bound being p.

The implicit attribute derivation module 222 may automatically derive (that is, implicitly derive) an implicit pointer attribute in the source code, and annotate a derivation result in the source code. The derivation result may be annotated in a position below the code in which the pointer is located, or may be annotated by using a where statement after the code. The implicit pointer attribute is a pointer attribute that is not explicitly recorded in the source code but actually exists. For example, a pointer attribute is not explicitly recorded in the code "int *p = malloc(sizeof(int) * 5)", but a pointer attribute "a length of a memory area pointed to by p is 5" actually exists. Generally, at a development stage, the developer does not explicitly annotate a pointer attribute in the code, and the pointer attribute is implicit in the code. In this application, this case is referred to as having the pointer attribute. When a pointer has a pointer attribute (that is, the pointer has an implicit pointer attribute or an explicitly annotated pointer attribute), the implicit pointer attribute may be added to the source code based on the syntax rule defined by the language definition module 210. For example, in a code statement "int *p = q", a pointer p is defined, and a value is assigned to the pointer p by another pointer q, but only q is recorded in the code, and a pointer attribute of q is not recorded. In this case, it is considered that the pointer p has no pointer attribute. When a pointer has no pointer attribute, the implicit attribute derivation module 222 needs to derive a pointer attribute, and add the derived pointer attribute to the pointer. Alternatively, when the implicit attribute derivation module 222 cannot derive a pointer attribute, the on-demand interactive reminder module 223 may remind the developer of the missing pointer attribute, and the developer adds the pointer attribute. Implicit attribute derivation may include pointer inheritance statement attribute derivation, branch statement attribute derivation, pointer operation attribute derivation, and function inheritance attribute derivation.

Pointer inheritance statement attribute derivation means that when a pointer assigns a value to another pointer, and the assigner has a pointer attribute, and the assignee has no pointer attribute, the pointer attribute of the assigner may be directly propagated to the assignee. In this embodiment of this application, for ease of description, a value on a left side of an equation may be referred to as a left-hand value, and a value on a right side of the equation may be referred to as a right-hand value (the same below).

For example, the following code (pseudo code) exists:

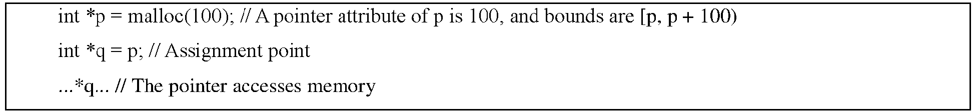

In the code, the computing device learns that a case in which a pointer (p) is assigned to another pointer (q) exists in the code (a right-hand value is assigned to a left-hand value). In this case, a pointer attribute of q may be implicitly derived. Specifically, the complete attribute scanning module 221 may identify, based on the syntax rule defined by the language definition module 210, that the pointer attribute of the pointer p is "a lower bound is p, and an upper bound is p + 100". Then the implicit attribute derivation module 222 may add the pointer attribute of the pointer p identified by the implicit attribute derivation module 222 to the source code, and obtain the following code:

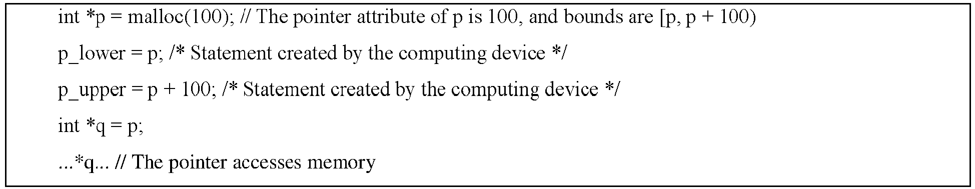

Further, the pointer q is obtained by assigning the value of the pointer p. Therefore, the implicit attribute derivation module 222 may propagate the pointer attribute of the pointer p to the pointer q, and the finally obtained code is as follows:

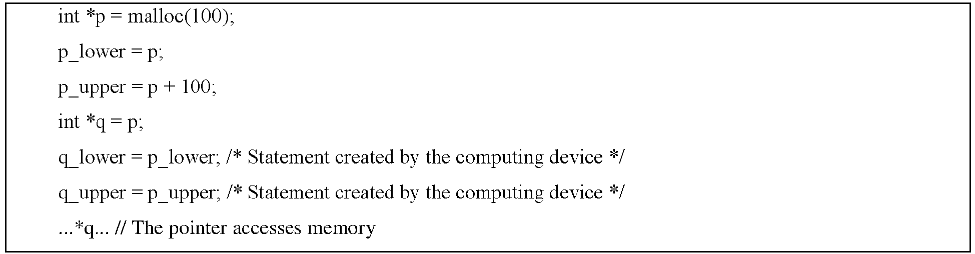

Branch statement attribute derivation means that a branch statement exists in the code and that a definition of a same variable exists in different branches in the branch statement. In this case, when a left-hand value of a pointer in the code statement does not include a pointer attribute, a pointer attribute of a right-hand value may be propagated to the left-hand value. The branch statement, also known as a decision statement, refers to a statement that does one thing when a decision condition is met, and does another thing or nothing when the decision condition is not met. Examples include an if statement and a switch statement.

For example, the following code (pseudo code) exists in the source code:

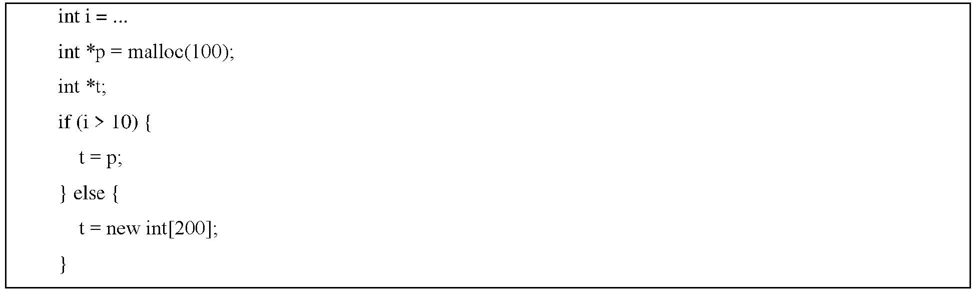

In the code, a branch statement (if statement) exists. In different branches, the same variable (t) is defined, and the left-hand value variable t does not include an explicit pointer attribute. In this case, the complete attribute scanning module 221 may identify a pointer attribute of a right-hand value in a pointer statement based on the syntax rule defined by the language definition module 210. Then the implicit attribute derivation module 222 may add the pointer attribute of the pointer p identified by the complete attribute scanning module 221 to the source code, and the finally obtained code is as follows:

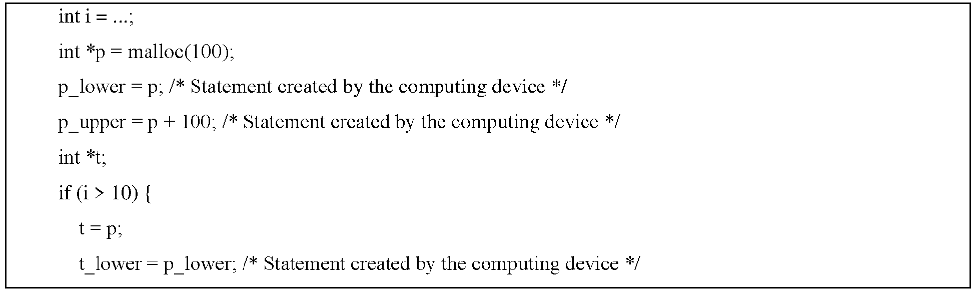

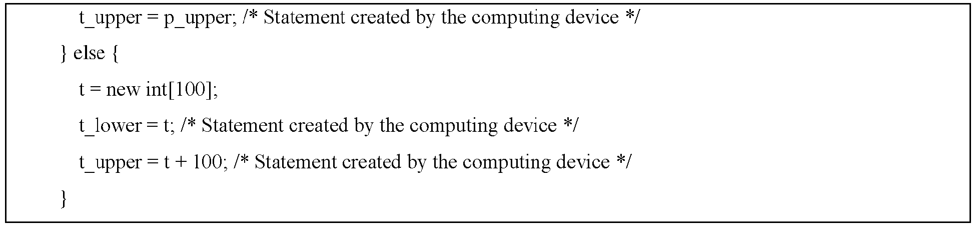

Pointer operation attribute derivation means that after a pointer is defined, an operation is performed on the pointer. It may be understood that a pointer attribute of the pointer after the operation should be consistent with a pointer attribute of the pointer when the pointer is initially defined. In this case, the pointer attribute of the defined pointer may be added to the code.

For example, the following code (pseudo code) exists in the source code:

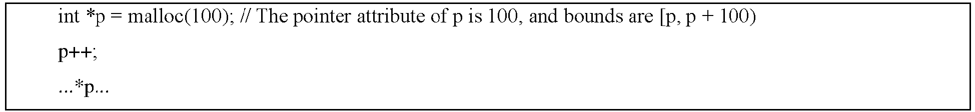

In the code, after the pointer p is defined, an operation (self-increment) is performed on the pointer. In this case, the complete attribute scanning module 221 may identify a pointer attribute of a right-hand value in a pointer statement based on the syntax rule defined by the language definition module 210. Then the implicit attribute derivation module 222 may add the pointer attribute of the pointer p identified by the complete attribute scanning module 221 to the source code. Even if a self-increment operation (p++) is performed subsequently, upper and lower bounds of a memory area pointed to by the pointer p after the self-increment operation are still original upper and lower bounds of the pointer p. The finally obtained code is as follows:

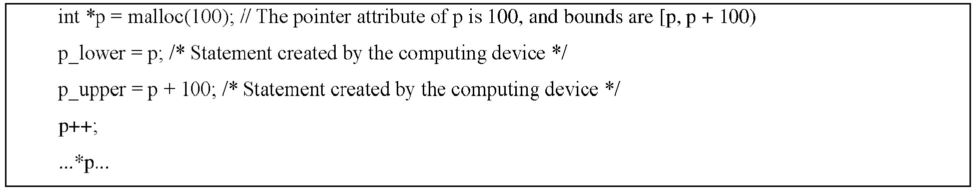

Function inheritance attribute derivation is a process of passing an argument to a function in the source code. In this case, a pointer attribute of an assigner may be explicitly passed to an assignee. The assigner is an actual argument in the function, and the assignee is a formal argument in the function.

For example, the following code (pseudo code) exists in the source code:

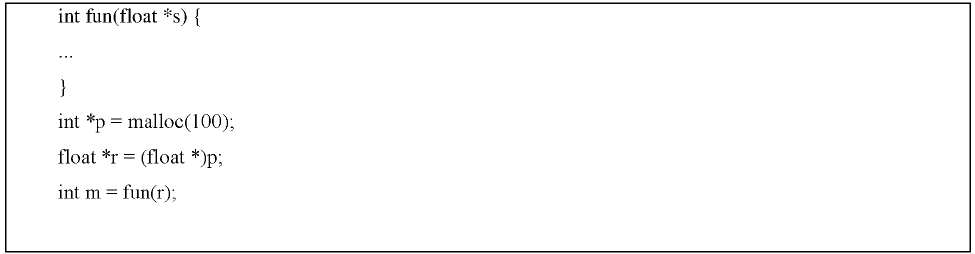

A function (fun) exists in the code, and a formal argument (s) is required in an implementation of the function. In this case, a pointer attribute of an assigner (actual argument r) may be propagated to an assignee (formal argument s). The complete attribute scanning module 221 may identify a pointer attribute of an assigner (actual argument r) in a pointer statement based on the syntax rule defined by the language definition module 210. Then the implicit attribute derivation module 222 may propagate the pointer attribute of the assigner (actual argument r) identified by the complete attribute scanning module 221 to the assignee (formal argument s), and add the pointer attribute to the code. Finally, the following code is obtained:

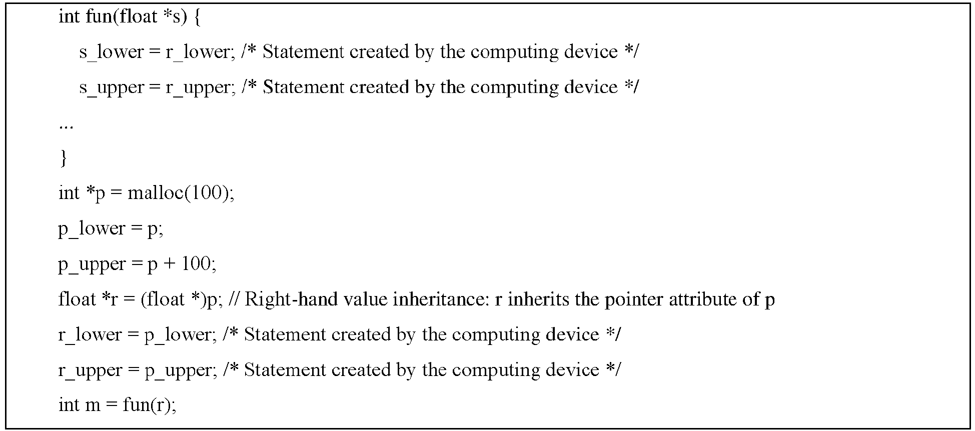

If a pointer attribute cannot be obtained after the attribute completion module 220 performs implicit derivation on a pointer, the on-demand interactive reminder module 223 may be configured to remind the developer of the missing pointer attribute by using a user interface (user interface, UI), so that the developer completes pointer attribute supplementation. Certainly, the developer may alternatively choose not to perform explicit pointer attribute supplementation for the pointer attribute. When reminding the developer of the missing pointer attribute by using the UI, the on-demand interactive reminder module 223 may choose to display the missing pointer attribute by using pointer attribute annotation syntax with relatively strong compatibility. For example, a length attribute may be identified by extending an attribute field based on the GNU standard. For example, T*p _attribute_ ((count ("len"))) is used to identify a T-type pointer p, and length information of the T-type pointer p is identified by using a variable len.

For example, the following code (pseudo code) exists in the source code:

| |
|---|
| ```
Int *u = fun2();
``` |

In the code, a value needs to be assigned to a pointer u by using a method fun2, but a function body of the method fun2 is invisible. Therefore, the pointer u lacks a pointer attribute, and the pointer attribute cannot be obtained through implicit derivation. In this case, the on-demand interactive reminder module 223 may remind the developer of the missing pointer attribute in this line of code by using the UI.

The semantic check module 230 may be configured to check whether a semantic error exists in the source code. For example, when the developer writes the source code, some code violates a syntax rule defined by the language definition module 210. The semantic check module may notify, by using a UI, the developer of the code that violates the syntax rule, and the developer modifies the code, so that the code complies with the syntax rule defined by the language definition module 210. For example, the developer performs calculation on a variable in code, and the code is "int a = 1; int b = a/0". However, a syntax rule defined by the language definition module 210 specifies that 0 cannot be used as a divisor. In this case, the semantic check module 230 may detect that the code herein violates the syntax rule, and notify the developer of the code by using the UI.

The check instruction insertion module 240 may be configured to insert, by using the pointer attributes obtained by the attribute completion module 220, check instructions into all risky statements that have memory security problems. A risky statement may include at least one of a code statement for a pointer operation, a code statement for assigning a value to a pointer and annotated with a length constraint of an assignee, a code statement for passing a pointer argument to a function with a length constraint on the passed pointer argument, a code statement for returning a pointer by a function with a length constraint on the returned pointer, and a code statement for memory access. The check instruction insertion module 240 may include a pre-decision point insertion module 241, a check point insertion module 242, and an access point insertion module 243. The pre-decision point insertion module 241 may be configured to insert a check instruction before a code statement that involves a pointer operation. The check point insertion module 242 may be configured to insert a check instruction before a code statement for assigning a value to a pointer with a pointer attribute in a right-hand value and a length constraint on a left-hand value in an assignment statement. The check point insertion module 242 may be further configured to insert a check instruction before a code statement for passing a pointer argument to a function with a length constraint on the passed pointer argument. The check point insertion module 242 may be further configured to insert a check instruction before a code statement for returning a pointer by a function with a length constraint on the returned pointer. The access point insertion module 243 may be configured to insert a check instruction before a code statement for memory access.

For example, the following code (pseudo code) exists in the source code:

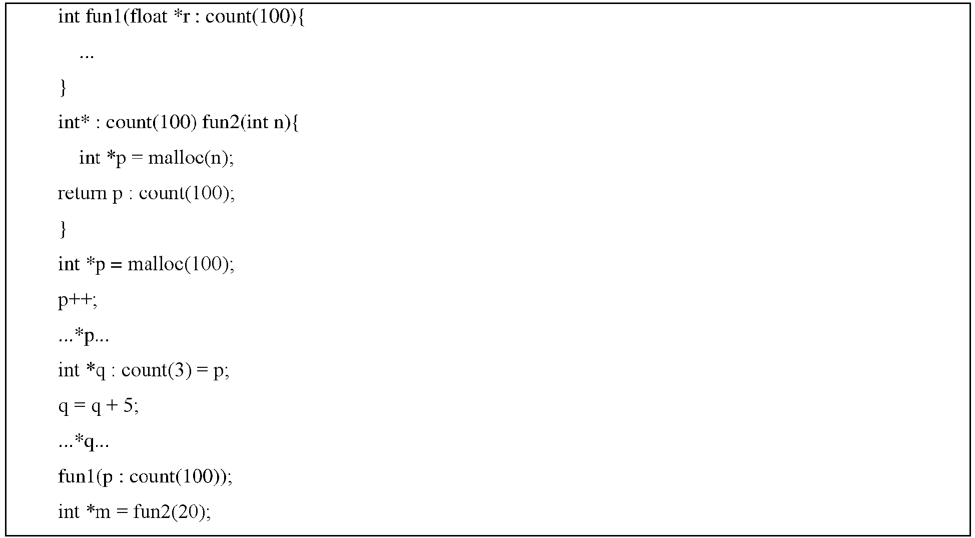

In this code segment, a self-increment operation (p++) is performed on a pointer p, and a shift operation (q + 5) is performed on a pointer q. Therefore, the two lines of code are code statements that involve pointer operations, and the pre-decision point insertion module 241 may insert check instructions before the two lines of code. A code statement "int *q : count(3) = p" involves an action of assigning a value of p to the pointer q, that is, assigning a value to the pointer, and a length constraint (fixed to 3) is defined in a left-hand value. Therefore, this line of code is a code statement for assigning a value to a pointer with a pointer attribute in a right-hand value and a length constraint on a left-hand value in an assignment statement, and the check point insertion module 242 may insert a check instruction before this line of code. In a code statement "fun1(p : count(100))", when a program invokes a function fun1, a passed argument defined for the function fun1 needs to be a pointer, and there is a length constraint on the pointer. Therefore, the program passes the pointer p to the function fun1, and the length of the pointer p is constrained. Therefore, the code is a code statement for passing a pointer argument to a function with a length constraint on the passed pointer argument, and the check point insertion module 242 may insert a check instruction before this line of code. In a code statement "int *m = fun4(20)", the program calls a function fun2 and passes an argument "20" to the function fun2. In this case, the program runs to the function fun2. For the function fun2, it is specified that an argument of an int type needs to be passed. After the function is executed, a pointer of the int type needs to be returned, and the pointer needs to meet a length constraint "count(100)", that is, "return p : count(100)". Therefore, this line of code "return p : count(100)" is a code statement for returning a pointer by a function with a length constraint on the returned pointer, and the check point insertion module 242 may insert a check instruction before this line of code. In this segment of code, there are also lines of code (pseudo code) for the pointer p and the pointer q to access memory: "...*p..." and "...*q...". The two lines of code are code statements for memory access, and the access point insertion module 243 may insert check instructions before the two lines of code.

After the attribute completion module 220 performs attribute completion on this code segment, code with complete attributes may be obtained.

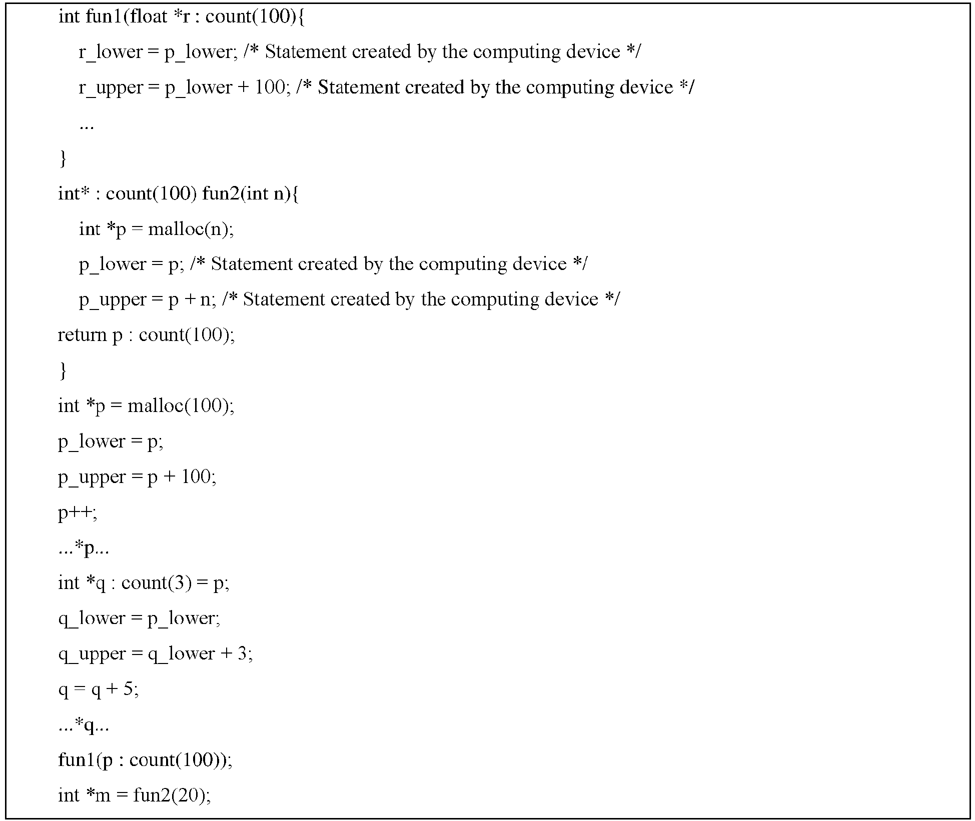

The check instruction insertion module 240 may generate a check instruction based on a pointer attribute supplemented by the attribute completion module 220, and insert the generated check instruction into the code. The finally obtained code is as follows:

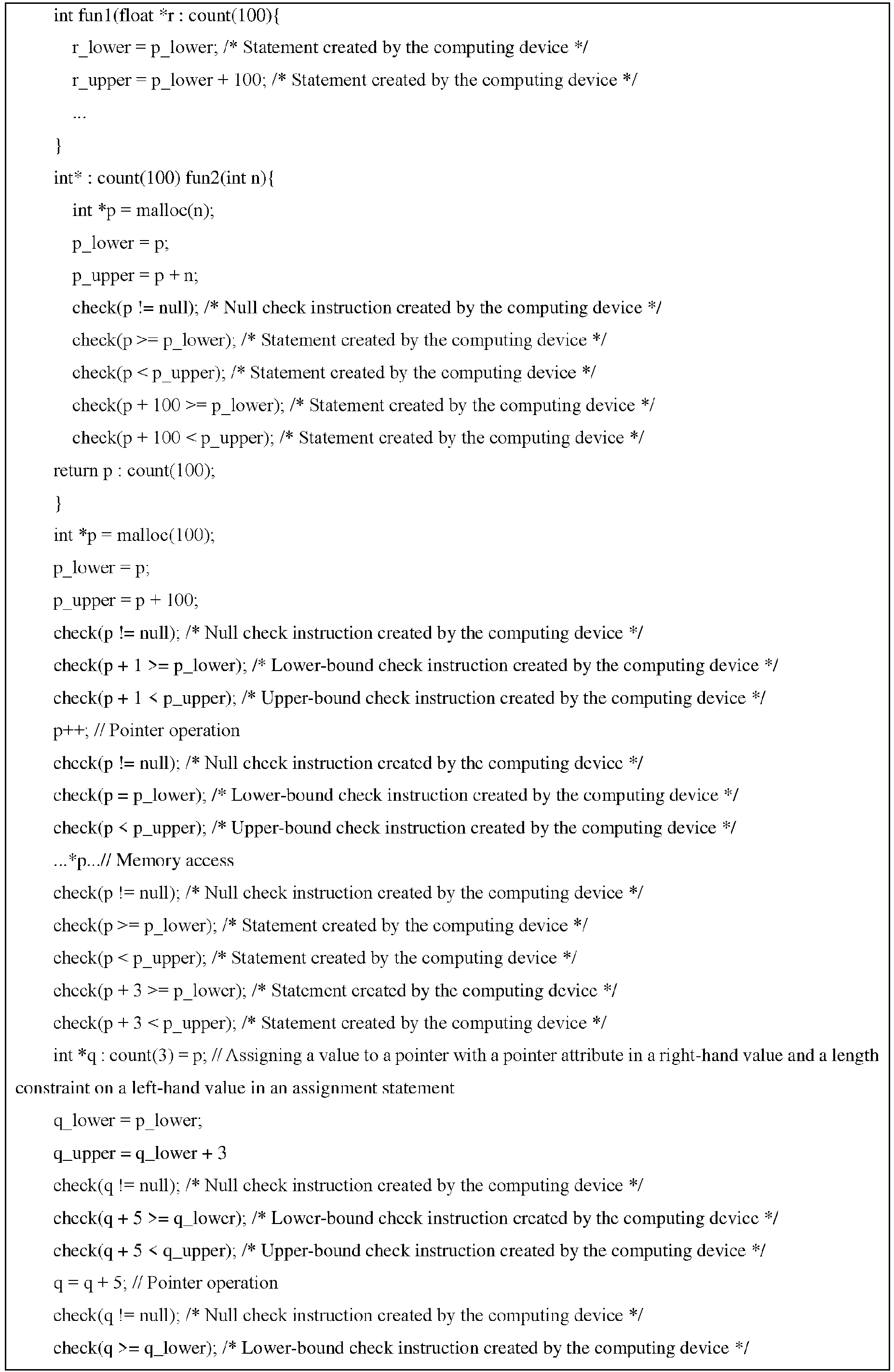

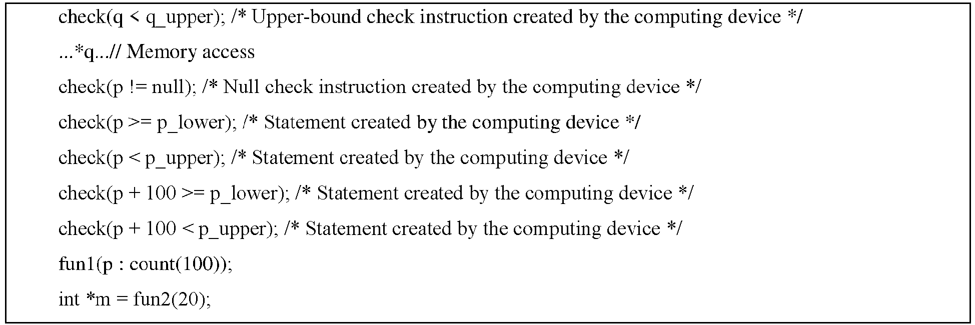

In a possible implementation, there is no need to insert a null check instruction and an out-of-bounds check instruction before every risky statement. Because a pointer operation, pointer assignment, argument passing, and function return do not involve actual memory access, null checks may not be performed, and only out-of-bounds checks are performed. To be specific, out-of-bounds check instructions are inserted before a code statement for a pointer operation, a code statement for assigning a value to a pointer and annotated with a length constraint of an assignee, a code statement for passing a pointer argument to a function with a length constraint on the passed pointer argument, and a code statement for returning a pointer by a function with a length constraint on the returned pointer. During memory access, because an out-of-bounds check has been performed before memory access, only a null check instruction may be inserted.

For example, the code obtained after the check instructions are inserted may be optimized as follows:

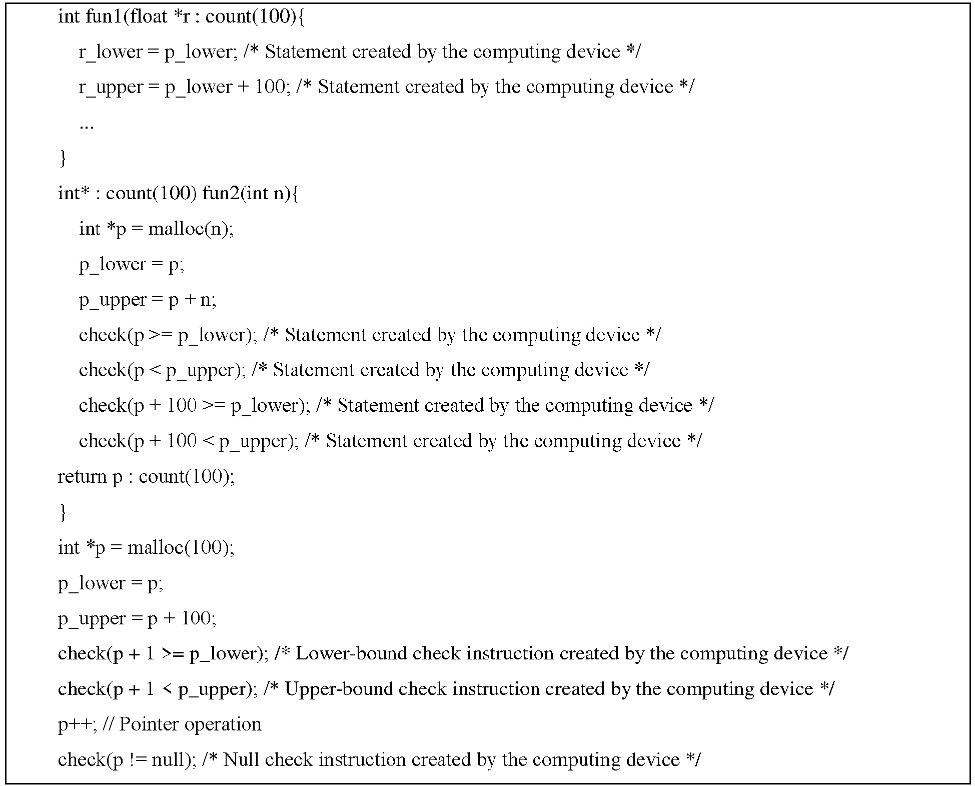

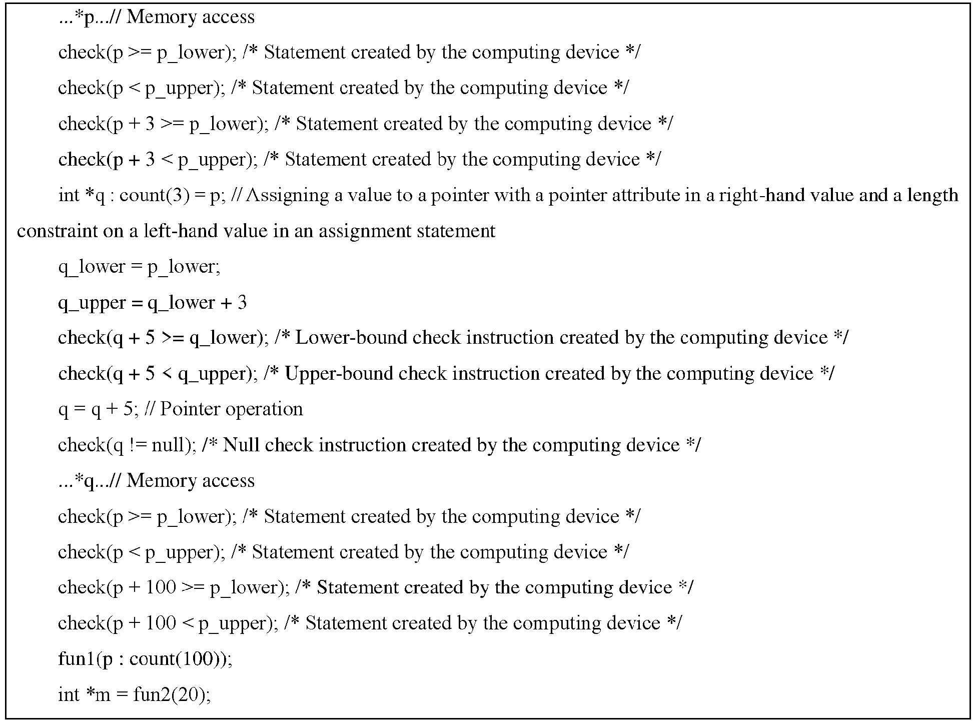

The code optimization module 250 may be configured to optimize the code obtained after the check instruction insertion module 240 inserts the check instructions, to optimize and improve program code in terms of a shorter runtime, smaller occupied space, and the like while ensuring program functionality.

The code generation module 260 may be configured to generate, based on the code optimized by the code optimization module 250, a machine instruction that can be run by a machine (for example, the computing device).

The foregoing describes the memory security improvement system 200 provided in this embodiment of this application. Next, based on content depicted in FIG. 2, a memory security improvement method provided in an embodiment of this application is described.

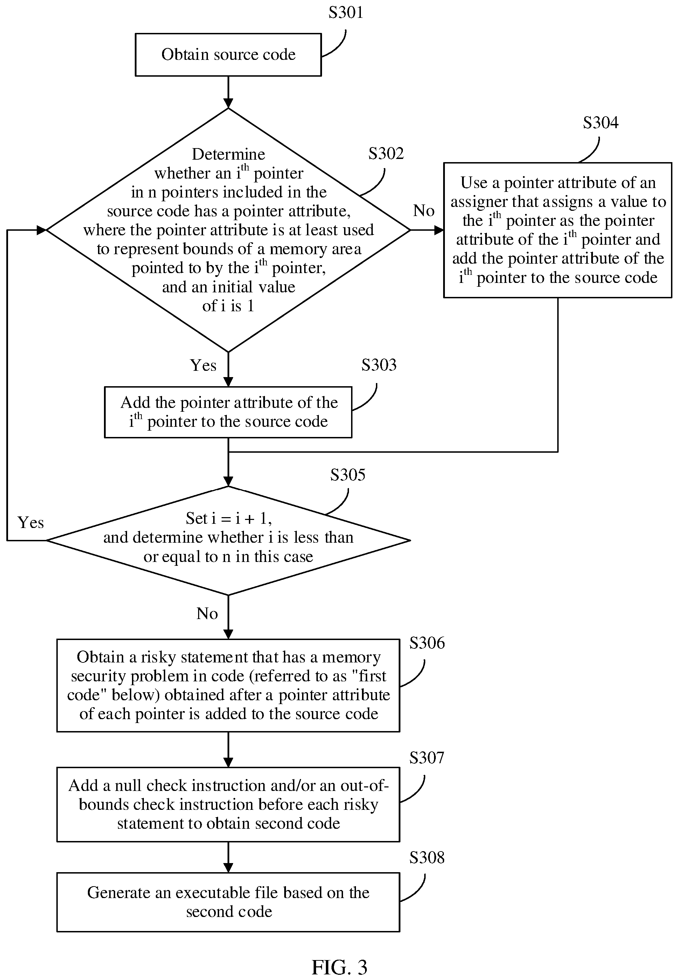

For example, FIG. 3 shows a procedure of a memory security improvement method. It should be understood that the method may be performed by any apparatus, device, platform, or device cluster with computing and processing capabilities. For ease of description, the following uses a computing device as an example for description. As shown in FIG. 3, the method may include the following steps.

S301: Obtain source code.

In this embodiment, after writing the source code, a developer may store the source code in the computing device. In this way, the computing device obtains the source code.

S302: Determine whether an i^{th} pointer in n pointers included in the source code has a pointer attribute, where the pointer attribute is at least used to represent bounds of a memory area pointed to by the i^{th} pointer, an initial value of i is 1, and n is a total quantity of pointers included in the source code.

In this embodiment, after obtaining the source code, the computing device may scan the source code based on a preset syntax rule, for example, a syntax rule defined by the foregoing language definition module 210, to learn the n pointers included in the source code. In addition, the computing device may also sequentially determine, based on a preset syntax rule, the n pointers scanned by the computing device, to determine whether each pointer has a pointer attribute. When it is determined that the i^{th} pointer has the pointer attribute, it indicates that a code statement in which the i^{th} pointer is located is a code statement directly defined by using a function included in preset pointer identification syntax (for example, a syntax rule defined by the foregoing language definition module 210). In this case, S303 may be performed. When it is determined that the i^{th} pointer has no pointer attribute, it indicates that the code statement in which the i^{th} pointer is located is a code statement in which one pointer assigns a value to another pointer, and S304 may be performed.

For example, the following code (pseudo code) exists in the source code:

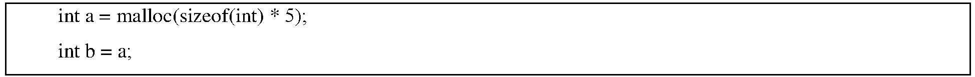

A pointer a and a pointer b exist in the code. When determining the pointer a, the computing device may determine that the pointer a is a code statement defined by using a malloc function. The computing device may determine, based on a preset syntax rule, that the pointer a has a pointer attribute and that a memory area pointed to by the pointer a has a length of 5, with a lower bound being a and an upper bound being a + 5. When determining the pointer b, the computing device may determine that the pointer b has a value assigned by the pointer a.

S303: Add the pointer attribute of the i^{th} pointer to the source code.

In this embodiment, when the computing device determines that the i^{th} pointer has the pointer attribute, if the code statement in which the i^{th} pointer is located is not annotated with the pointer attribute, the computing device may parse the code statement based on predefined pointer attribute identification syntax, to obtain the pointer attribute of the i^{th} pointer. Then the computing device may add the pointer attribute of the i^{th} pointer to the source code based on predefined pointer attribute annotation syntax (for example, a syntax rule defined by the foregoing language definition module 210), and perform S305. A position at which the pointer attribute of the i^{th} pointer is added is adjacent to the code statement to which the i^{th} pointer belongs, and is located after the code statement.

For example, a code statement in which a pointer is located is "int *p = malloc(100)" and the computing device learns that a pointer attribute of the pointer is that a lower bound of a memory area pointed to by the pointer p is p and that an upper bound thereof is p + 100. The computing device may define "p_lower = p" based on the predefined pointer attribute annotation syntax to annotate the lower bound of the memory area pointed to by the pointer, and define "p_upper = p + 100" to annotate the upper bound of the memory area pointed to by the pointer. The defined upper and lower bound information is added to the code, and the following code is obtained:

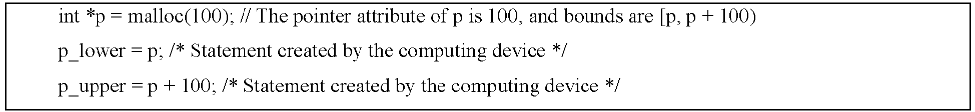

S304: Use a pointer attribute of an assigner that assigns a value to the i^{th} pointer as the pointer attribute of the i^{th} pointer and add the pointer attribute of the i^{th} pointer to the source code.

In this embodiment, when the computing device determines that the i^{th} pointer is a pointer having a value assigned by another pointer, that is, when the i^{th} pointer has no pointer attribute, the computing device may implicitly derive the attribute of the i^{th} pointer by using the foregoing implicit attribute derivation module 222 (for details, refer to the foregoing description), to obtain the pointer attribute of the i^{th} pointer, add the derived pointer attribute to the source code, and perform S305. For example, if the i^{th} pointer has no pointer attribute, and the code statement in which the i^{th} pointer is located is not annotated with a length constraint of the i^{th} pointer, the pointer attribute of the assigner that assigns the value to the i^{th} pointer may be used as the pointer attribute of the i^{th} pointer. For example, the following code (pseudo code) exists in the source code:

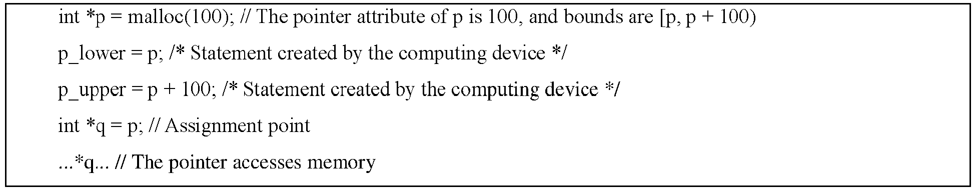

In the code, the computing device determines that the i^{th} pointer (pointer q) has no length constraint and that the pointer is a pointer having a value assigned by another pointer (pointer p). The computing device may implicitly derive the attribute of the i^{th} pointer by using the implicit attribute derivation module 222, and use a pointer attribute of the pointer p as a pointer attribute of the pointer q. The finally obtained code is as follows:

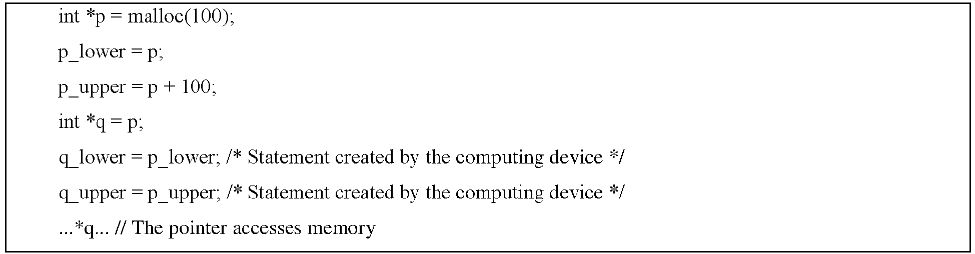

In some embodiments, if the i^{th} pointer has no pointer attribute, and the code statement in which the i^{th} pointer is located is annotated with the length constraint of the i^{th} pointer, a lower bound of a memory area pointed to by the assigner that assigns the value to the i^{th} pointer may be used as the lower bound of the memory area pointed to by the i^{th} pointer, and a sum of the lower bound of the memory area pointed to by the i^{th} pointer and a length constrained by the length constraint of the i^{th} pointer is used as the upper bound of the memory area pointed to by the i^{th} pointer, to obtain the pointer attribute of the i^{th} pointer. Then the pointer attribute of the i^{th} pointer may be added to the source code. For example, the following code (pseudo code) exists in the source code:

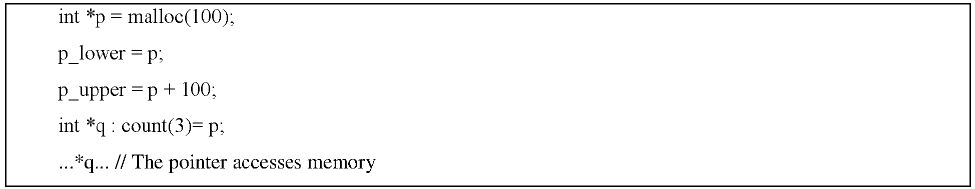

In the code, the computing device determines that the i^{th} pointer (pointer q) has no pointer attribute and that the pointer is a pointer having a value assigned by another pointer (pointer p). The computing device may implicitly derive the attribute of the i^{th} pointer by using the implicit attribute derivation module 222, use a lower bound in the pointer attribute of the pointer p as a lower bound in the pointer attribute of the pointer q, and use a sum of the lower bound in the pointer attribute of the pointer q and the length constrained by the length constraint as an upper bound of the pointer q. The finally obtained code is as follows:

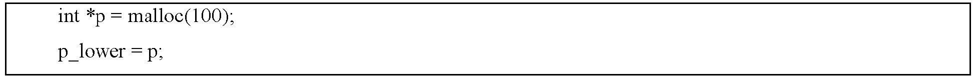

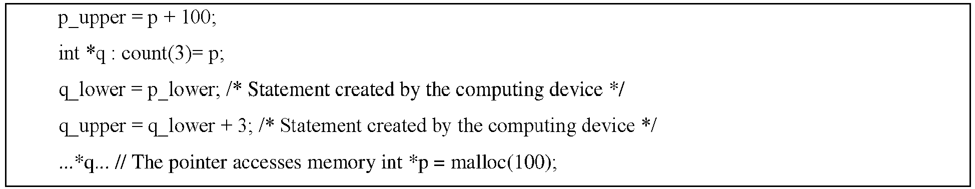

S305: Set i = i + 1, and determine whether i is less than or equal to n in this case.

In this embodiment, after adding the pointer attribute of the i^{th} pointer to the source code, the computing device may process a pointer next to the i^{th} pointer, that is, set i = i + 1. In this case, it needs to be determined whether current i is greater than n. When it is determined that i is greater than n in this case, it indicates that all pointers have been processed, and S306 may be performed. When i is less than or equal to n, it indicates that there is still an unprocessed pointer; therefore, S302 needs to be performed again.

In some embodiments, S302 to S305 may be understood as steps of "adding, to the source code, a pointer attribute of each pointer included in the source code".

S306: Obtain a risky statement that has a memory security problem in code (referred to as "first code" below) obtained after the pointer attribute of each pointer is added to the source code.

In this embodiment, the computing device may scan the first code to obtain at least one of a code statement for a pointer operation in the first code, a code statement for assigning a value to a pointer in the first code and annotated with a length constraint of an assignee, and a code statement for memory access in the first code. These code statements are considered as risky statements that may cause memory security problems. When the code includes a function, a risky statement may further include a code statement for passing a pointer argument to the function with a length constraint on the passed pointer argument, and a code statement for returning a pointer from the function with a length constraint on the returned pointer.

For the code statement for the pointer operation in the first code, because the operation is performed on the pointer in the code, subsequent access to memory space pointed to by the pointer is essentially access to memory space pointed to by the pointer after the operation. However, it cannot be ensured that a memory space location pointed to by the pointer after the operation is within a memory space range of the pointer. In other words, the pointer may go out of bounds. For the code statement for assigning the value to the pointer in the first code and annotated with the length constraint of the assignee, because the assigner needs to inherit pointer attribute information of the assignee, but in this case, the assignee has a length constraint, the length constraint of the assignee is converted to a length constraint of the memory area pointed to by the pointer of the assigner. In this case, even if an out-of-bounds check is performed on the assignee, the pointer may still go out of bounds. For the code statement for memory access in the first code, it cannot be ensured that a memory area pointed to by the pointer is not null. Therefore, all these cases may cause memory security problems and may be considered as risky statements in the code.

If the code includes a function, for the code statement for passing the pointer argument to the function with the length constraint on the passed pointer argument, because the passed argument is defined to be a pointer with a length constraint in a formal argument, the passed argument needs to comply with the constraint defined in the formal argument. However, in this case, the pointer is already a defined pointer. When a length required by the formal argument and compliant with the constraint exceeds a range of a memory area pointed to by the pointer, a memory out-of-bounds situation may occur. For the code statement for returning the pointer by the function with the length constraint on the returned pointer, the function defines a length constraint for a return value. When an argument is passed out from a memory area via the return value of the function, an actual valid length of the memory area may be less than a length constrained by the return value defined by the function. In this case, a memory out-of-bounds situation may also occur.

S307: Add an out-of-bounds check instruction and/or a null check instruction before each risky statement to obtain second code.

In this embodiment, after risky statements are obtained, for any risky statement, an out-of-bounds check instruction used to perform an out-of-bounds check on a pointer included in the risky statement may be first generated based on a pointer attribute of the pointer included in the risky statement; and/or a null check instruction used to perform a null check on the pointer included in the risky statement is generated based on a pointer variable of the pointer included in the risky statement. The check instruction is used to check whether an object pointed to by the pointer included in the risky statement is null, and/or check whether a location pointed to by the pointer included in the risky statement falls within a range of bounds of a memory area pointed to by the pointer. Then the check instruction may be added before the risky statement. After the check instruction is inserted before each risky statement, the second code is obtained. In some embodiments, the computing device obtains each risky statement in the code, and may generate the check instruction by using the added pointer attribute, based on check instruction generation syntax defined by the language definition module 210, and by setting the pointer variable to be greater than or equal to a lower bound in the pointer attribute and less than an upper bound in the pointer attribute. For example, the first code includes the following code:

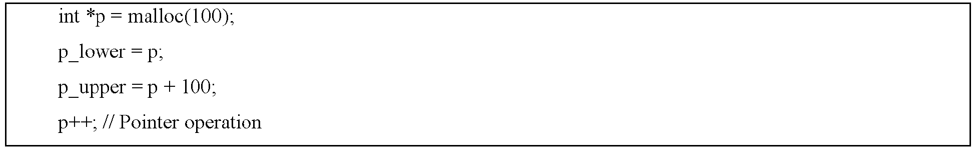

The computing device obtains a risky statement "p++" and may generate check instructions "check(p + 1 >= p_lower)" and "check(p + 1 < p_upper)" by using pointer attributes "p_lower = p" and " p_upper = p + 100" that are added to the first code. The generated check instructions are inserted into the first code. Finally, the following code is obtained:

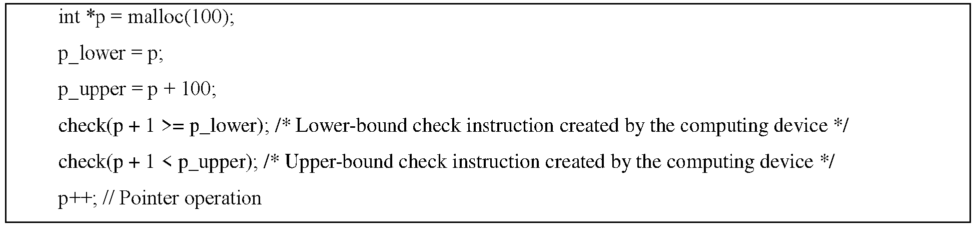

In some embodiments, when an operation is performed on a pointer, a value is assigned to the pointer, and the value is passed by using a function, no actual access is performed on the memory. Therefore, a null check may not be performed, and only an out-of-bounds check is performed, that is, an out-of-bounds check instruction may be inserted before the two types of code statements. In other words, when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, the out-of-bounds check instruction may be added before the risky statement. During memory access, because an out-of-bounds check has been performed before memory access, only a null check instruction may be inserted, that is, the null check instruction may be inserted before this type of code statement. In other words, when the risky statement is the code statement for memory access, the null check instruction is added before the risky statement. The out-of-bounds check instruction may also be referred to as a first instruction, and is used to check whether a location pointed to by a pointer is within a range of bounds of a memory area pointed to by the pointer. The null check instruction may also be referred to as a second instruction, and is used to check whether an object pointed to by a pointer is null.

In some embodiments, only the out-of-bounds check instruction may be added before the risky statement, or only the null check instruction may be added before the risky statement, or both the out-of-bounds check instruction and the null check instruction may be added.

S308: Generate an executable file based on the second code.

In this embodiment, after obtaining the second code, the computing device may perform optimization, code generation, and the like on the second code by using a code compiler, to obtain a binary executable file.

In this way, the pointer attribute of each pointer is added to the source code by using an implicit derivation method in the source code, a check instruction is generated based on bounds that are of a memory area pointed to by a pointer and that are represented by the pointer attribute, and the check instruction is inserted before a code statement that may cause memory security, so that when a memory security problem occurs, the problem is intercepted in the first place. Because the pointer attribute is added by the computing device, a more comprehensive assurance capability can be provided. In addition, source code modification costs of the developer are greatly reduced. When a problem occurs, the developer can conveniently locate the problem, and code debugging efficiency of the developer can be improved.

In some embodiments, when the pointer attribute of each pointer included in the source code is added to the obtained source code, and it is determined that a pointer has no pointer attribute, the computing device may further present, to the developer, information indicating that the pointer has no pointer attribute. Then the developer may write a pointer attribute of the pointer by using the computing device. After the developer completes writing, the computing device may obtain a supplement operation performed by the developer on the pointer attribute of the pointer. Finally, the computing device may add the pointer attribute supplemented by the developer to the source code.

It may be understood that, in the description of embodiments of this application, the C language is mainly used as an example for description. It may be understood that any other similar programming language (for example, C++) that uses a pointer offset for memory access is applicable to this method. Sequence numbers of steps in the foregoing embodiments do not mean an execution order. An execution order of processes should be determined based on functions and internal logic of the processes, and should not be construed as any limitation on implementation processes of embodiments of this application. In addition, in some possible implementations, the steps in the foregoing embodiments may be selectively performed, or may be partially performed, or may be completely performed based on an actual situation. This is not limited herein.

The foregoing describes the technical solutions provided in embodiments of this application. For ease of understanding, the following describes an application process by using an example.

Firstly, based on the method in the foregoing embodiment, an embodiment of this application provides an integrated development environment.

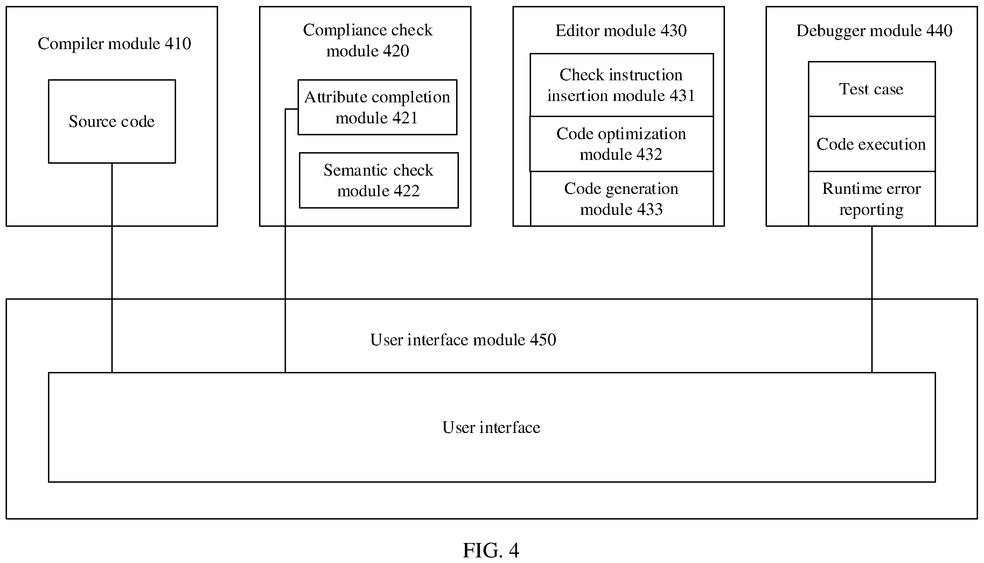

For example, FIG. 4 is a diagram of an integrated development environment. The integrated development environment 400 may be deployed on a computing device. As shown in FIG. 4, the integrated development environment 400 includes an editor module 410, a compliance check module 420, a compiler module 430, a debugger module 440, and a user interface module 450.

The editor module 410 may be configured for a developer to write source code.

The compliance check module 420 may be configured to perform attribute completion on the source code written by the developer, and perform a semantic check on the source code. The compliance check module 420 may include an attribute completion module 421 and a semantic check module 422. For example, the attribute completion module 421 may be the attribute completion module 220 in FIG. 2.

After the developer writes the source code, the computing device may obtain the source code written by the developer. Then the computing device may scan, by using the compliance check module 420, the source code written by the developer, to obtain pointers included in the source code. Then the computing device determines whether an i^{th} pointer in these pointers lacks a pointer attribute. The pointer attribute herein may be a pointer attribute required for generating a subsequent check instruction, for example, may be an upper bound and a lower bound of a memory area pointed to by the pointer. It should be noted that the lack of the pointer attribute herein means that the pointer attribute is not explicitly recorded in the source code. For the missing pointer attribute, the attribute completion module 421 may be configured to complete the pointer attribute. Herein, completing the pointer attribute means explicitly recording the pointer attribute in a form of a code statement in the code. After the attribute completion is performed on the pointer in the code, the semantic check module 422 may perform a semantic check on the code obtained after the attribute completion, to ensure that the code statement is a valid statement. The attribute completion module 421 may further annotate a pointer whose pointer attribute cannot be supplemented in the code, for example, annotate a flag identifier before a code statement in which the pointer whose pointer attribute cannot be supplemented is located.

The compiler module 430 may be configured to insert a check instruction into the source code, and perform code optimization and code generation on the code in which the check instruction is inserted. The compiler module 430 may include a check instruction insertion module 431, a code optimization module 432, and a code generation module 433. For example, the check instruction insertion module 431 may be the check instruction insertion module 240 in FIG. 2.

After the compliance check module 420 supplements the pointer attribute in the code, the compiler module 430 may obtain a risky statement in the code. The risky statement may include at least one of a code statement including a pointer operation, a code statement for assigning a value to a pointer and annotated with a length constraint of an assignee, and a code statement for memory access. After obtaining the risky statement, the check instruction insertion module 431 may insert the check instruction before the risky statement. The code optimization module 432 may optimize the code in which the check instruction is inserted, for example, may delete redundant code from the code. The code generation module 433 may generate, based on the optimized code, a machine instruction that can be run by the computing device.

The debugger module 440 may be configured to generate a test case, execute test code, and report an error in runtime.

The user interface module 450 may be configured to provide a user interface. Based on prompt content provided by the computing device, the developer may edit or modify code on the user interface provided by the user interface module 405. For example, the attribute completion module 421 annotates the flag identifier before the code statement in which the pointer whose pointer attribute cannot be supplemented is located, and the user interface module 450 may prompt the developer with the flag identifier. After seeing the flag identifier, the developer may modify the code.

Secondly, based on the method in the foregoing embodiments, an embodiment of this application further provides a compiler.

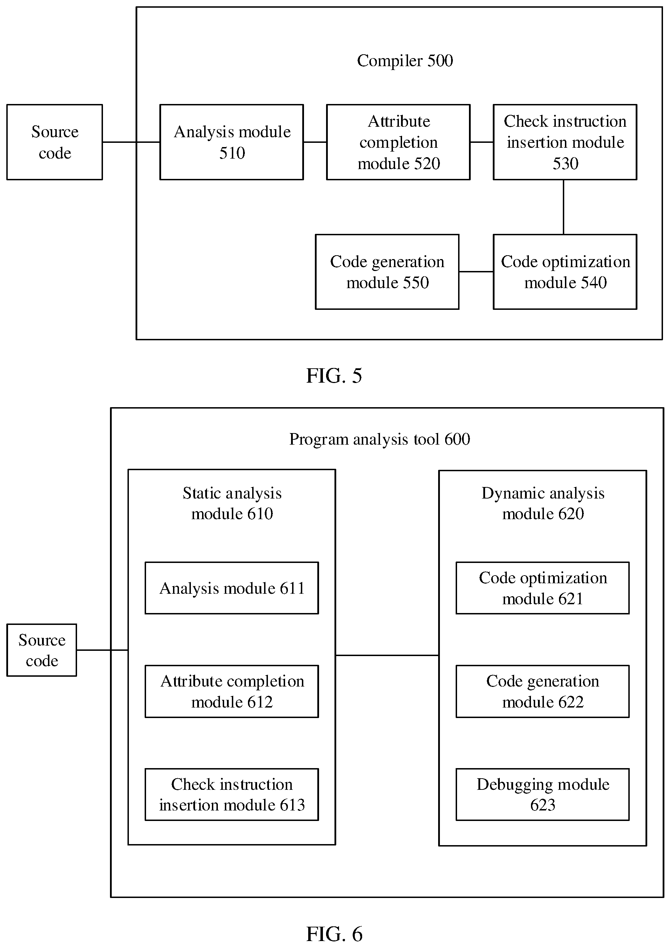

For example, FIG. 5 shows a compiler. As shown in FIG. 5, the compiler 500 may include an analysis module 510, an attribute completion module 520, a check instruction insertion module 530, a code optimization module 540, and a code generation module 550. After the compiler 500 obtains source code written by a developer, the analysis module 510 analyzes the source code. The analysis may include lexical analysis of the code, syntax analysis of the code, semantic analysis of a code statement, and the like. The analysis module 510 can ensure validity of the code statement, and obtain a pointer that lacks a pointer attribute in the source code and a risky statement in the code. The lack of the pointer attribute herein means that the pointer attribute is not explicitly recorded in the source code. After the analysis module 510 analyzes the source code, the attribute completion module 520 may perform pointer attribute completion on the pointer that lacks the pointer attribute in the code statement. Herein, completing the pointer attribute means explicitly recording the pointer attribute in a form of a code statement in the code. After the attribute completion module 520 completes the missing pointer attribute, the check instruction insertion module 530 may insert a check instruction before the risky statement in the code. Then the code optimization module 540 may optimize the code in which the check instruction is inserted. After the optimization, the code generation module 550 may generate, based on the optimized code, a machine instruction that can be run by the computing device.

Thirdly, based on the method in the foregoing embodiments, an embodiment of this application further provides a program analysis tool.

For example, FIG. 6 shows a program analysis tool. As shown in FIG. 6, the program analysis tool 600 may include a static analysis module 610 and a dynamic analysis module 620. The static analysis module 610 may include an analysis module 611, an attribute completion module 612, and a check instruction insertion module 613. The analysis module 611 may be the analysis module 510 in FIG. 5. The attribute completion module 612 may be the attribute completion module 520 in FIG. 5. The check instruction insertion module 613 may be the check instruction insertion module 530 in FIG. 5. The dynamic analysis module 620 may include a code optimization module 621, a code generation module 622, and a debugging module 623. The code optimization module 621 may be the code optimization module 540 in FIG. 5. The code generation module 622 may be the code generation module 550 in FIG. 5. The debugging module 623 may be the debugger module 440 in FIG. 4. For related descriptions, refer to related descriptions in FIG. 4 and FIG. 5. Details are not described herein again.

Based on the method in the foregoing embodiment, an embodiment of this application further provides a memory security improvement apparatus.

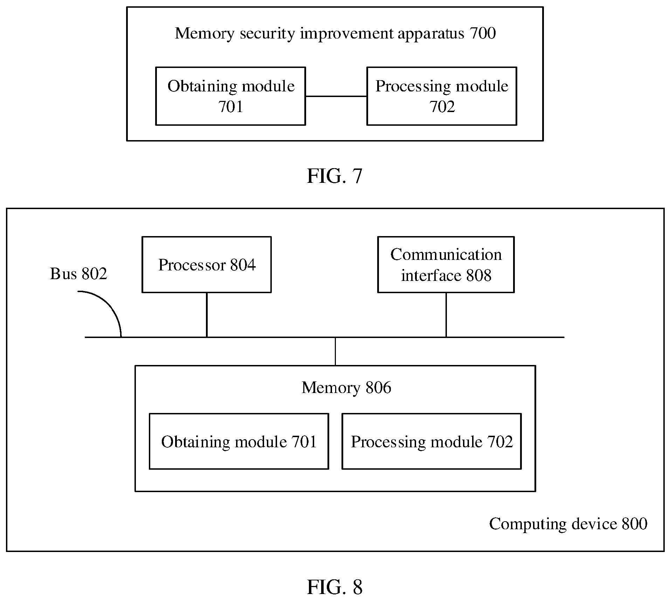

For example, FIG. 7 shows a memory security improvement apparatus. As shown in FIG. 7, the memory security improvement apparatus 700 may include an obtaining module 701 and a processing module 702. The obtaining module 701 is configured to obtain source code. The processing module 702 is configured to add pointer attributes of a plurality of pointers to the source code to obtain first code, where the plurality of pointers are pointers in the source code, and the pointer attributes are at least used to represent bounds of memory areas pointed to by the pointers. The processing module 702 is further configured to generate, based on the pointer attributes of the plurality of pointers, an out-of-bounds check instruction corresponding to each of the plurality of pointers. The processing module 702 is further configured to add the out-of-bounds check instruction before a risky statement that has a memory security problem in the first code, to obtain second code. Each risky statement includes at least one pointer. The processing module 702 is further configured to generate an executable file based on the second code.

In some embodiments, when adding the pointer attributes of the plurality of pointers to the source code, the processing module 702 is specifically configured to: for any pointer in the source code, determine that the any pointer has a pointer attribute and that a code statement in which the any pointer is located is not annotated with the pointer attribute of the any pointer; parse the code statement in which the any pointer is located, to obtain the pointer attribute of the any pointer; and add the pointer attribute of the any pointer to the source code.

In some embodiments, when adding the pointer attributes of the plurality of pointers to the source code, the processing module 702 is specifically configured to: for any pointer in the source code, determine that the any pointer has no pointer attribute and that a code statement in which the any pointer is located is not annotated with a length constraint of the any pointer; use a pointer attribute of a first pointer as a pointer attribute of the any pointer, where the first pointer is an assigner that assigns a value to the any pointer; and add the pointer attribute of the any pointer to the source code.

In some embodiments, when adding the pointer attributes of the plurality of pointers to the source code, the processing module 702 is specifically configured to: for any pointer in the source code, determine that the any pointer has no pointer attribute and that a code statement in which the any pointer is located is annotated with a length constraint of the any pointer; use a lower bound of a memory area pointed to by a first pointer as a lower bound of a memory area pointed to by the any pointer, and use a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and add the pointer attribute of the any pointer to the source code.

In some embodiments, when adding the pointer attributes of the plurality of pointers to the source code, the processing module 702 is specifically configured to: for any pointer in the source code, determine that the any pointer has no pointer attribute; obtain a supplement operation performed by a developer on a pointer attribute of the any pointer; and add the pointer attribute supplemented by the developer to the source code.

In some embodiments, in the first code, a pointer attribute of each pointer is located after a code statement in which the pointer is located.

In some embodiments, the processing module 702 may be further configured to: generate, based on pointer variables of the plurality of pointers, a null check instruction corresponding to each of the plurality of pointers; and add the null check instruction before the risky statement.

In some embodiments, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In some embodiments, when adding the check instruction before each risky statement, the processing module 702 is specifically configured to: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, add the out-of-bounds check instruction before the risky statement, where the out-of-bounds check instruction is used to perform an out-of-bounds check; or when the risky statement is the code statement for memory access, add the null check instruction before the risky statement, where the null check instruction is used to perform a null check.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the method in the foregoing embodiment, an embodiment of this application further provides another memory security improvement apparatus. The memory security improvement apparatus may include a processing module. The processing module is configured to add pointer attributes of a plurality of pointers to the source code to obtain first code, where the plurality of pointers are pointers in the source code, and the pointer attributes are at least used to represent bounds of memory areas pointed to by the pointers. The processing module is further configured to generate, based on pointer variables of the plurality of pointers, a null check instruction corresponding to each of the plurality of pointers. The processing module is further configured to add the null check instruction before a risky statement that has a memory security problem in the first code, to obtain second code. The processing module is further configured to generate an executable file based on the second code.

In some embodiments, code statements in which the plurality of pointers are located are not annotated with the pointer attributes of the plurality of pointers, and when adding the pointer attributes of the plurality of pointers to the source code, the processing module is specifically configured to: for any pointer in the source code, determine that the any pointer has a pointer attribute and that a code statement in which the any pointer is located is not annotated with the pointer attribute of the any pointer; parse the code statement in which the any pointer is located, to obtain the pointer attribute of the any pointer; and add the pointer attribute of the any pointer to the source code.

In some embodiments, when adding the pointer attributes of the plurality of pointers to the source code, the processing module is specifically configured to: for any pointer in the source code, determine that the any pointer has no pointer attribute and that a code statement in which the any pointer is located is not annotated with a length constraint of the any pointer; use a pointer attribute of a first pointer as a pointer attribute of the any pointer, where the first pointer is an assigner that assigns a value to the any pointer; and add the pointer attribute of the any pointer to the source code.

In some embodiments, when adding the pointer attributes of the plurality of pointers to the source code, the processing module is specifically configured to: for any pointer in the source code, determine that the any pointer has no pointer attribute and that a code statement in which the any pointer is located is annotated with a length constraint of the any pointer; use a lower bound of a memory area pointed to by a first pointer as a lower bound of a memory area pointed to by the any pointer, and use a sum of the lower bound of the memory area pointed to by the any pointer and a length constrained by the length constraint of the any pointer as an upper bound of the memory area pointed to by the any pointer, to obtain a pointer attribute of the any pointer, where the first pointer is an assigner that assigns a value to the any pointer; and add the pointer attribute of the any pointer to the source code.

In some embodiments, when adding the pointer attributes of the plurality of pointers to the source code, the processing module is specifically configured to: for any pointer in the source code, determine that the any pointer has no pointer attribute; obtain a supplemented pointer attribute for the any pointer; and add the supplemented pointer attribute to the source code.

In some embodiments, in the first code, a pointer attribute of each pointer is located after a code statement in which the pointer is located.

In some embodiments, the processing module is further configured to: generate, based on the pointer attributes of the plurality of pointers, an out-of-bounds check instruction corresponding to each of the plurality of pointers; and add the out-of-bounds check instruction before the risky statement.

In some embodiments, the risky statement includes at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

In some embodiments, when adding the out-of-bounds check instruction and/or the null check instruction before the risky statement, the processing module is specifically configured to: when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, add the out-of-bounds check instruction before the risky statement, where the out-of-bounds check instruction is used to perform an out-of-bounds check; or when the risky statement is the code statement for memory access, add the null check instruction before the risky statement, where the null check instruction is used to perform a null check.

This application further provides a computing device 800. As shown in FIG. 8, the computing device 800 includes a bus 802, a processor 804, a memory 806, and a communication interface 808. The processor 804, the memory 806, and the communication interface 808 communicate with each other by using the bus 802. The computing device 800 may be a server or a terminal device. It should be understood that a quantity of processors and a quantity of memories in the computing device 800 are not limited in this application.

The bus 802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is represented by using only one line in FIG. 8. However, it does not indicate that there is only one bus or only one type of bus. The bus 804 may include a channel through which various components (for example, the memory 806, the processor 804, and the communication interface 808) of the computing device 800 transmit information to each other.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), such as a random access memory (random access memory, RAM). The processor 804 may further include a non-volatile memory (non-volatile memory), such as a read-only memory (read-only memory, ROM), a flash memory, a hard disk drive (hard disk drive, HDD), or a solid state drive (solid state drive, SSD).

The memory 806 stores executable program code, and the processor 804 executes the executable program code to implement functions of the foregoing obtaining module 701 and processing module 702 respectively, thereby implementing all or some steps of the method in the foregoing embodiment. In other words, the memory 806 stores instructions for performing all or some steps of the method in the foregoing embodiment.

Alternatively, the memory 806 stores executable code, and the processor 804 executes the executable code to implement functions of the foregoing memory security improvement apparatus 700, thereby implementing all or some steps of the method in the foregoing embodiment. In other words, the memory 806 stores instructions for performing all or some steps of the method in the foregoing embodiment.

The communication interface 803 uses a transceiver module, for example, but not limited to, a network interface card or a transceiver, to implement communication between the computing device 800 and another device or a communication network.

Based on the method in the foregoing embodiment, an embodiment of this application provides a computer-readable storage medium. The computer-readable storage medium stores a computer program. When the computer program is run on a processor, the processor is enabled to perform the method in the foregoing embodiment.

Based on the method in the foregoing embodiment, an embodiment of this application provides a computer program product. When the computer program product is run on a processor, the processor is enabled to perform the method in the foregoing embodiment.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor by executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

It may be understood that various numbers in embodiments of this application are merely used for distinguishing for ease of description and are not intended to limit the scope of embodiments of this application.

## Claims

1. A memory security improvement method, comprising:
adding pointer attributes of a plurality of pointers to source code to obtain first code, wherein the plurality of pointers are pointers in the source code, and the pointer attributes are at least used to represent bounds of memory areas pointed to by the pointers;
generating, based on the pointer attributes of the plurality of pointers, an out-of-bounds check instruction corresponding to each of the plurality of pointers;
adding the out-of-bounds check instruction before a risky statement that has a memory security problem in the first code, to obtain second code, wherein each risky statement comprises at least one pointer; and
generating an executable file based on the second code.

2. The method according to claim 1, wherein the adding pointer attributes of a plurality of pointers to source code specifically comprises:
for any pointer in the source code, determining that the any pointer has no pointer attribute and that a code statement in which the any pointer is located is not annotated with a length constraint of the any pointer;
using a pointer attribute of a first pointer as a pointer attribute of the any pointer, wherein the first pointer is an assigner that assigns a value to the any pointer; and
adding the pointer attribute of the any pointer to the source code.

3. The method according to claim 1, wherein the adding pointer attributes of a plurality of pointers to source code specifically comprises:
for any pointer in the source code, determining that the any pointer has no pointer attribute and that a code statement in which the any pointer is located is annotated with a length constraint of the any pointer;
using a lower bound of a memory area pointed to by a first pointer as a lower bound of a memory area pointed to by the any pointer, and using a sum of the lower bound of the memory area pointed to by the any pointer and a length constrained by the length constraint of the any pointer as an upper bound of the memory area pointed to by the any pointer, to obtain a pointer attribute of the any pointer, wherein the first pointer is an assigner that assigns a value to the any pointer; and
adding the pointer attribute of the any pointer to the source code.

4. The method according to claim 1, wherein code statements in which the plurality of pointers are located are not annotated with the pointer attributes of the plurality of pointers, and the adding pointer attributes of a plurality of pointers to source code specifically comprises:
for any pointer in the source code, determining that the any pointer has a pointer attribute;
parsing a code statement in which the any pointer is located, to obtain the pointer attribute of the any pointer; and
adding the pointer attribute of the any pointer to the source code.

5. The method according to claim 1, wherein the adding pointer attributes of a plurality of pointers to source code specifically comprises:
for any pointer in the source code, determining that the any pointer has no pointer attribute;
obtaining a supplemented pointer attribute for the any pointer; and
adding the supplemented pointer attribute to the source code.

6. The method according to any one of claims 1 to 5, wherein in the first code, a pointer attribute of each pointer is located after a code statement in which the pointer is located.

7. The method according to any one of claims 1 to 6, wherein the method further comprises:
generating, based on pointer variables of the plurality of pointers, a null check instruction corresponding to each of the plurality of pointers; and
adding the null check instruction before the risky statement.

8. The method according to any one of claims 1 to 7, wherein the risky statement comprises at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

9. The method according to claim 8, wherein the adding the out-of-bounds check instruction and/or the null check instruction before the risky statement specifically comprises:
when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, adding the out-of-bounds check instruction before the risky statement, wherein the out-of-bounds check instruction is used to perform an out-of-bounds check; or
when the risky statement is the code statement for memory access, adding the null check instruction before the risky statement, wherein the null check instruction is used to perform a null check.

10. A memory security improvement method, comprising:
adding pointer attributes of a plurality of pointers to source code to obtain first code, wherein the plurality of pointers are pointers in the source code, and the pointer attributes are at least used to represent bounds of memory areas pointed to by the pointers;
generating, based on pointer variables of the plurality of pointers, a null check instruction corresponding to each of the plurality of pointers;
adding the null check instruction before a risky statement that has a memory security problem in the first code, to obtain second code, wherein each risky statement comprises at least one pointer; and
generating an executable file based on the second code.

11. The method according to claim 10, wherein the adding pointer attributes of a plurality of pointers to source code specifically comprises:
for any pointer in the source code, determining that the any pointer has no pointer attribute and that a code statement in which the any pointer is located is not annotated with a length constraint of the any pointer;
using a pointer attribute of a first pointer as a pointer attribute of the any pointer, wherein the first pointer is an assigner that assigns a value to the any pointer; and
adding the pointer attribute of the any pointer to the source code.

12. The method according to claim 10, wherein the adding pointer attributes of a plurality of pointers to source code specifically comprises:
for any pointer in the source code, determining that the any pointer has no pointer attribute and that a code statement in which the any pointer is located is annotated with a length constraint of the any pointer;
using a lower bound of a memory area pointed to by a first pointer as a lower bound of a memory area pointed to by the any pointer, and using a sum of the lower bound of the memory area pointed to by the any pointer and a length constrained by the length constraint of the any pointer as an upper bound of the memory area pointed to by the any pointer, to obtain a pointer attribute of the any pointer, wherein the first pointer is an assigner that assigns a value to the any pointer; and
adding the pointer attribute of the any pointer to the source code.

13. The method according to claim 10, wherein code statements in which the plurality of pointers are located are not annotated with the pointer attributes of the plurality of pointers, and the adding pointer attributes of a plurality of pointers to source code specifically comprises:
for any pointer in the source code, determining that the any pointer has a pointer attribute;
parsing a code statement in which the any pointer is located, to obtain the pointer attribute of the any pointer; and
adding the pointer attribute of the any pointer to the source code.

14. The method according to claim 10, wherein the adding pointer attributes of a plurality of pointers to source code specifically comprises:
for any pointer in the source code, determining that the any pointer has no pointer attribute;
obtaining a supplemented pointer attribute for the any pointer; and
adding the supplemented pointer attribute to the source code.

15. The method according to any one of claims 10 to 14, wherein in the first code, a pointer attribute of each pointer is located after a code statement in which the pointer is located.

16. The method according to any one of claims 10 to 15, wherein the method further comprises:
generating, based on the pointer variables of the plurality of pointers, the null check instruction corresponding to each of the plurality of pointers; and
adding the null check instruction before the risky statement.

17. The method according to any one of claims 10 to 16, wherein the risky statement comprises at least one of a code statement for a pointer operation, a code statement for assigning a value to a pointer and annotated with a length constraint of an assignee, a code statement for passing a pointer argument to a function with a length constraint on a length of the passed argument pointer, a code statement for returning a pointer by a function with a length constraint on a length of the returned pointer, and a code statement for memory access.

18. The method according to claim 17, wherein the adding the out-of-bounds check instruction and/or the null check instruction before the risky statement specifically comprises:
when the risky statement is the code statement for the pointer operation, the code statement for assigning the value to the pointer and annotated with the length constraint of the assignee, the code statement for passing the pointer argument to the function with the length constraint on the length of the passed argument pointer, or the code statement for returning the pointer by the function with the length constraint on the length of the returned pointer, adding the out-of-bounds check instruction before the risky statement, wherein the out-of-bounds check instruction is used to perform an out-of-bounds check; or
when the risky statement is the code statement for memory access, adding the null check instruction before the risky statement, wherein the null check instruction is used to perform a null check.

19. A memory security improvement apparatus, comprising:
a processing module, configured to add pointer attributes of a plurality of pointers to source code to obtain first code, wherein the plurality of pointers are pointers in the source code, and the pointer attributes are at least used to represent bounds of memory areas pointed to by the pointers, wherein
the processing module is further configured to generate, based on the pointer attributes of the plurality of pointers, an out-of-bounds check instruction corresponding to each of the plurality of pointers;
the processing module is further configured to add the out-of-bounds check instruction before a risky statement that has a memory security problem in the first code, to obtain second code, wherein each risky statement comprises at least one pointer; and
the processing module is further configured to generate an executable file based on the second code.

20. A memory security improvement apparatus, comprising:
a processing module, configured to add pointer attributes of a plurality of pointers to source code to obtain first code, wherein the plurality of pointers are pointers in the source code, and the pointer attributes are at least used to represent bounds of memory areas pointed to by the pointers, wherein
the processing module is further configured to generate, based on pointer variables of the plurality of pointers, a null check instruction corresponding to each of the plurality of pointers;
the processing module is further configured to add the null check instruction before a risky statement that has a memory security problem in the first code, to obtain second code, wherein each risky statement comprises at least one pointer; and
the processing module is further configured to generate an executable file based on the second code.

21. A computing device, comprising:
at least one memory, configured to store a program; and
at least one processor, configured to execute the program stored in the memory, wherein when the program stored in the memory is executed, the processor is configured to perform the method according to any one of claims 1 to 9 or any one of claims 10 to 18.

22. A computer-readable storage medium, wherein the computer-readable storage medium stores a computer program, and when the computer program is run on a processor, the processor is enabled to perform the method according to any one of claims 1 to 9 or any one of claims 10 to 18.

23. A computer program product, wherein when the computer program product is run on a processor, the processor is enabled to perform the method according to any one of claims 1 to 9 or any one of claims 10 to 18.
